# EUROPEAN PATENT SPECIFICATION

(11) **EP 1 897 802 B1**
(45) Date of publication and mention of the grant of the patent: **02.11.2016**
(21) Application number: 07017778.7
(22) Date of filing: 11.09.2007
(51) Int. Cl.: B63H 21/20, B63H 21/21, B63H 20/20, B63H 20/00

(54) **Hybrid-type watercraft propulsion system and its operating method**
Hybridsystem zum Antrieb von Wasserfahrzeugen und Betriebsverfahren dafür
Système de propulsion de bateaux de type hybride et son procédé de fonctionnement

(30) Priority: 11.09.2006 JP 2006246081; 12.09.2006 JP 2006246585
(43) Date of publication of application: 12.03.2008
(73) Proprietor: Yamaha Hatsudoki Kabushiki Kaisha, Shizuoka-ken Shizuoka 438-8501 (JP)
(72) Inventor: Mizokawa, Takashi, Hammatsu-shi Shizuoka-ken 432-8528 (JP)
(74) Representative: Grünecker Patent- und Rechtsanwälte PartG mbB

(56) References cited:
- JP-A- 2001 301 692
- JP-A- 2003 080 955
- JP-A- 2004 257 294
- US-B1- 6 396 161
- US-B1- 6 857 918

## Description

The present invention relates to a hybrid-type watercraft propulsion system **according to the preamble of independent claim 1** and its operating method. More specifically, it relates to a hybrid-type watercraft propulsion system having an engine and an electric motor as a source of driving force for a propeller and its operating method. **Such a hybrid-type watercraft propulsion system can be taken from the prior art document** US 6,857,918 B1**. Said relates to a personal watercraft having a hybrid power source with a power plant, a controller, a jet propulsion system and a battery source. The power plant includes an electrical turning machine ETM that is operatively connected to an internal combustion engine. Said watercraft is provided with a throttle lever and there are various buttons provided which contain a shore button and a reverse handle for selecting a respective operation mode.**

The similar types of prior art are disclosed in JP-A-2004-257294 and JP-A-2006-36086**.**

In the JP-A-2004-257294, an example of cruising method using so-called "acceleration assist" is disclosed, in which the driving power of an engine is assisted by the driving power of an electric motor for the purpose of driving a power transmission device. In cruising with such acceleration assist, the output power of the electric motor is adjusted based on the operating speed of the control lever, throttle opening speed of the engine, the operating time of the control lever, and the engine rotation variation time.

Also in the JP-A-2006-36086, a throttle grip that can be operated in freely rotatable manner is provided on a bar handle, and a control switch is provided in the vicinity of the throttle grip. By operating the control switch, running and stopping of the engine and the electric motor, as well as the rotational direction of the electric motor can be controlled, and the rotational speeds of the electric motor and engine can be adjusted according to the turning operation of the throttle grip.

The technique in JP-A-2004-257294, however, is to ensure consistency of the engine operation with the electric motor operation on the assumption that the engine is always running while under way. Therefore, such technique cannot prevent the exhaust gas and the noise emission during the trolling operation.

In JP-A-2006-36086, two control means composed of control switch and the throttle grip must be used for controlling the running, stopping, and rotational speeds of the engine as well as the electric motor, and the operation of such control means was troublesome.

**In** JP 2001-301692 A**, which is also the basis for the preamble of claim 1, an electronic motor is arranged between a reduction gear of the propeller shaft and the propeller so as to damp the vibration of the propeller shaft and the output of an engine is assisted by the output of the electric motor by electric charging with the electric motor.**

Therefore, the objective of the present invention is to provide a hybrid-type watercraft propulsion system and its operating method by which an engine and an electric motor can be controlled easily, and at the same time the exhaust gas and the noise during the trolling operation can be suppressed.

**According to the present invention said object is solved by Hybrid-type watercraft propulsion system having the features of independent claim one. Moreover, said object is also solved by a method for operating the hybrid-type watercraft propulsion system according to claim 18. Preferred embodiments are laid down in the dependent claims.**

This objective is solved in an inventive manner by a hybrid-type watercraft propulsion system having an engine and an electric motor as a source of driving force for a propeller and comprising a setting means configured to set a propeller driving mode according to instructions input via a single instruction means, said single instruction means being adapted for mutual input of instructions regarding the operating mode of the system as well as an amount of output power of the driving source. The instruction means includes a rotatable control lever configured to receive instructions regarding the types of operating mode, as well as the amount of output power from the source of driving force by means of the lever position. Preferably, the setting means is configured to set a first propeller driving mode, in which the propeller is driven by the electric motor, when a trolling mode is instructed via the instruction means, and is configured to adjust the amount of output power of the electric motor according to these instructions via the instruction means.

Further, preferably the setting means is configured to set a second propeller driving mode, in which the propeller is driven by the engine, when a regular cruising mode is instructed, and is configured to adjust the amount of output power of the engine according to these instructions via the instruction means.

Still further, preferably in the first propeller driving mode, the only driving source for driving the propeller is the electric motor.

Therein, it is beneficial if a prescribed range extending in forward and backward directions around a neutral position of the control lever is a stop mode, a prescribed range in the forward side of the stop mode range is a trolling mode, and a range farther in the forward side of the trolling mode range is a regular cruising mode, and a range in the backward section of the stop mode range is a reverse mode.

It is further beneficial if a variation of the electric motor output power relative to the displacement of the control lever in the trolling mode is set to be smaller than a variation of the engine output power relative to the displacement of the control lever in the regular cruising mode.

It is still further beneficial if a hysteresis is provided, by which the mode switching position of the control lever is different in the opening operation that moves the control lever farther from the neutral position in comparison with such position in the closing operation to move the control lever closer to the neutral position.

According to a further preferred embodiment, the hybrid-type watercraft propulsion system further comprises a clutch provided between the engine and the electric motor, wherein the electric motor is disposed between the engine and the propeller.

According to a still further preferred embodiment, the hybrid-type watercraft propulsion system further comprises a battery for accumulating electric power to be supplied to the electric motor; and a charge level detecting means for detecting the amount of electricity remaining in the battery; and a first determination means for determining in the first propeller driving mode whether the electric power should be charged to the battery by using the engine generation or not based on the result from the detection by the charge level detecting means.

Therein, connection between the engine and the propeller may be disengaged in the first propeller driving mode.

According to a yet further preferred embodiment, the hybrid-type watercraft propulsion system further comprises a revolutions per minute detecting means for detecting the engine speed; and a second determination means for determining in the second propeller driving mode whether the engine should be connected to the propeller or not based on comparison between the result from the detection by the revolution per minute detecting means and a first prescribed value.

According to yet another preferred embodiment, the hybrid-type watercraft propulsion system further comprises a third determination means for determining in the second propeller driving mode if the propeller should be driven by utilizing the accelerating electric motor as well, or, alternatively, the propeller should be driven without running the electric motor, based on comparison between the result from the detection by the revolution per minute detecting means and a second prescribed value.

Beneficially, the engine is operated at idle when the electric motor is driven by the electric power from the battery in the first propeller driving mode.

According to another preferred embodiment, the hybrid-type watercraft propulsion system comprises the battery for accumulating the electric power to be supplied to the electric motor; and the charge level detecting means for detecting the amount of electricity remaining in the battery, wherein the setting means sets the propeller driving mode to the first propeller driving mode or to the second propeller driving mode, additionally taking account of comparison between the result from the detection by the charge level detecting means and a first threshold.

According to another preferred embodiment, the hybrid-type watercraft propulsion system comprises the first determination means for determining in the first propeller driving mode whether the electric power should be charged to the battery by means of the engine generation based on comparison between the result from the detection by the charge level detecting means and a second threshold.

According to another preferred embodiment, the hybrid-type watercraft propulsion system further comprises a switching means for alternatively selecting to use or not to use the electric motor for driving the propeller, wherein the setting means sets the propeller driving mode to the first propeller driving mode or to the second propeller driving mode, additionally taking account of the setting selected by the switching means.

According to another preferred embodiment, the hybrid-type watercraft propulsion system comprises the battery for accumulating electric power to be supplied to the electric motor; the charge level detecting means for detecting the amount of electricity remaining in the battery, and a fourth determination means for determining in the first propeller driving mode whether the electric motor should be driven by the electric power from the battery without restricting the output power of the electric motor, or the electric motor should be driven by the electric power from the battery restricting the output power of the electric motor based on the result from the detection by the charge level detecting means.

The objective is solved for the method aspect, in an inventive manner, by an operating method for a hybrid-type watercraft propulsion system having an engine and an electric motor as a source of driving force for a propeller, comprising a first operating step, in which instructions are received regarding the types of operating mode as well as regarding the amount of output power from the source of driving force; and further comprising a second operating step, in which a setting is made for the propeller driving mode according to the instruction received in the first step; wherein in the second operating step, the propeller driving mode is set to the first propeller driving mode, in which the propeller is driven by the electric motor, when the trolling mode is instructed in the first step; and the amount of output power from the electric motor is adjusted according to the instruction received in the first operating step.

Preferably, the propeller driving mode is set to the second propeller driving mode, in which the propeller is driven by the engine, when the regular cruising mode is instructed in the first operating step, and the amount of output power from the engine is adjusted according to the instruction received in the first operating step.

In the following, the present invention is explained in greater detail with respect to several embodiments thereof in conjunction with the accompanying drawings, wherein:
- FIG. 1: is an illustration showing a watercraft propulsion system according to one embodiment of the present teaching,
- FIG. 2: is an illustration showing a control lever,
- FIG. 3: is a chart showing the corresponding relations between the control lever position and the out put power from the source of driving force,
- FIG. 4: is a flow chart showing the overall operation of the watercraft propulsion system,
- FIG. 5: is a flow chart showing the operating mode determination process in step 17 of FIG. 4,
- FIG. 6: is a flow chart showing an example of forward operation process according to the embodiment shown in FIG. 1,
- FIG. 7: is a flow chart showing an example of determination process for the trolling operation,
- FIG. 8: is a flow chart showing another example of forward operation process,
- FIG. 9: is a flow chart showing still another example of forward operation process,
- FIG. 10: is a flow chart showing further still another example of forward operation process,
- FIG. 11: is an illustration showing a watercraft propulsion system according to another embodiment of the present teaching,
- FIG. 12: is a flow chart showing an example of the forward operation process according to the embodiment shown in FIG. 11,
- FIG. 13: is a flow chart showing another example of forward operation process, and
- FIG. 14: is a flow chart showing still another example of forward operation process.

### Description of Reference Numerals:

10, 10a: watercraft propulsion system
12: propeller
14: engine
16: electric motor
22: electromagnetic clutch
26: forward / reverse switching device
28: electric generator body
32: ignition device
34: throttle valve
36: engine speed sensor
38: throttle electric motor
40: throttle opening sensor
42: controller
44: main switch
46: control lever
48: drive/power generation switch
50: trouble lamp
52: battery
54: battery voltage sensor
56: engine switch

Now, an embodiment will be described below with reference to the drawings.

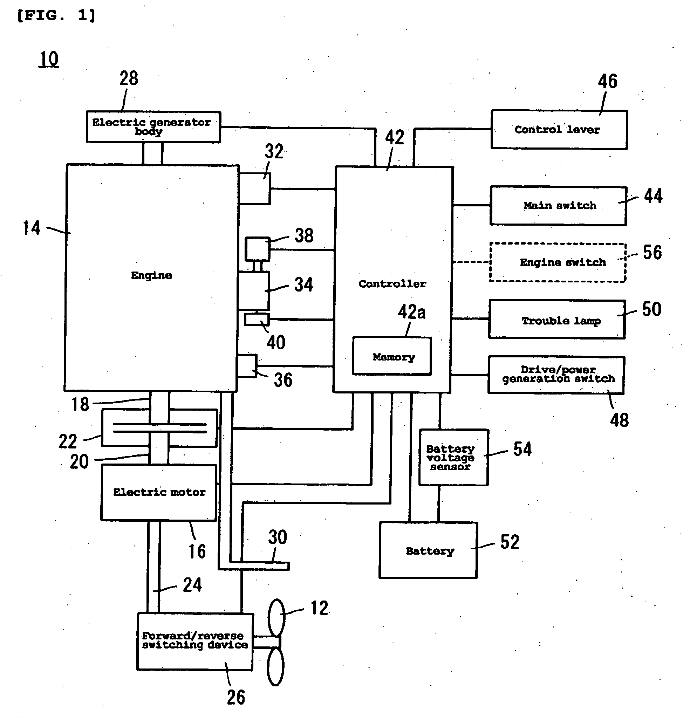

Referring to FIG.1, a watercraft propulsion system 10 according to an embodiment is of a hybrid type having a propeller 12, an engine 14 as a source of driving force for the propeller 12, and an electric motor 16, and is a motor-centered type watercraft propulsion system in which the electric motor 16 is disposed between the engine 14 and the propeller 12. It should be noted that the watercraft propulsion system 10 and 10a (that will be described later) may be configured as an outboard motor or as a part of the watercraft.

In the watercraft propulsion system 10, an electromagnetic clutch 22 is provided between a crankshaft 18 of the engine 14 and a rotor 20 of an electric motor 16. The crankshaft 18 and the rotor 20 are connected or separated by turning on or off the electromagnetic clutch 22. A driveshaft 24 is joined to the rotor 20 of the electric motor 16, and the driveshaft 24 is connected to the propeller 12 via a forward / reverse switching device 26. The rotational direction of the propeller 12 is determined by the forward / reverse switching device 26. The forward / reverse switching device 26 is a common dog clutch as can be found on outboard motors, for instance, that is operated by an electric actuator.

An electric generator body 28 used for engine generation is disposed on the top of the engine 14, and the electric generator body 28 is provided on the upper end of the crankshaft 18. Also, an exhaust pipe 30, an ignition device 32 for ignition of the engine 14, a throttle valve 34 for adjusting the amount of fuel delivered to the engine 14, and an engine speed sensor 36 for detecting the engine rpm (revolutions per minute) are provided on the engine 14. A throttle motor 38 for driving the throttle valve 34, and a throttle opening sensor 40 for detecting the throttle valve 34 are provided on the throttle valve 34. The exhaust pipe 30 is provided so that the exhaust opening is located in the rearward of the propeller 12.

The electric motor 16, the electromagnetic clutch 22, the forward / reverse switching device 26, the electric generator body 28, the ignition device 32, the engine speed sensor 36, the throttle motor 38, and the throttle opening sensor 40 are connected to a controller 42. Further, a main switch 44 for starting (ON) or stopping (OFF) the operation of the watercraft propulsion system 10, a control lever 46 for giving instructions on the types of operating mode as well as on the amount of output power from the source of driving force, a drive / power generation switch 48 for selectively setting the driving function or power generation function, a trouble lamp 50 to make a trouble annunciation, a battery 52 composed of a 24V battery, for instance, and a battery voltage sensor 54 for detecting the voltage of the battery 52 are connected to the controller 42.

The controller 42 is furnished with; the signals indicating the opening of the throttle valve 34 by the throttle opening sensor 40, the signals indicating the rpm of the engine 14 by the engine speed sensor 36, the ON / OFF signals by the main switch 44, the lever position signals indicating the type of operating mode and the amount of output power from the source of driving force by the control lever 46, the setting signals indicating driving function or power generation function by the drive / power generation switch 48, and the signals indicating the battery voltage by the battery voltage sensor 54. In addition, an electric power obtained by the engine generation at the electric generator body 28 charges up the battery 52 via the controller 42.

Further, the controller 42 gives; the ignition instructions to the ignition device 32, the driving signals to the throttle motor 38, the ON/OFF signals to the electromagnetic clutch 22, the driving signals and the electric power from the battery 52 to the electric motor 16, the setting signals of forward or reverse to the forward / reverse switching device 26, and the lamp lighting signals to the trouble lamp 50.

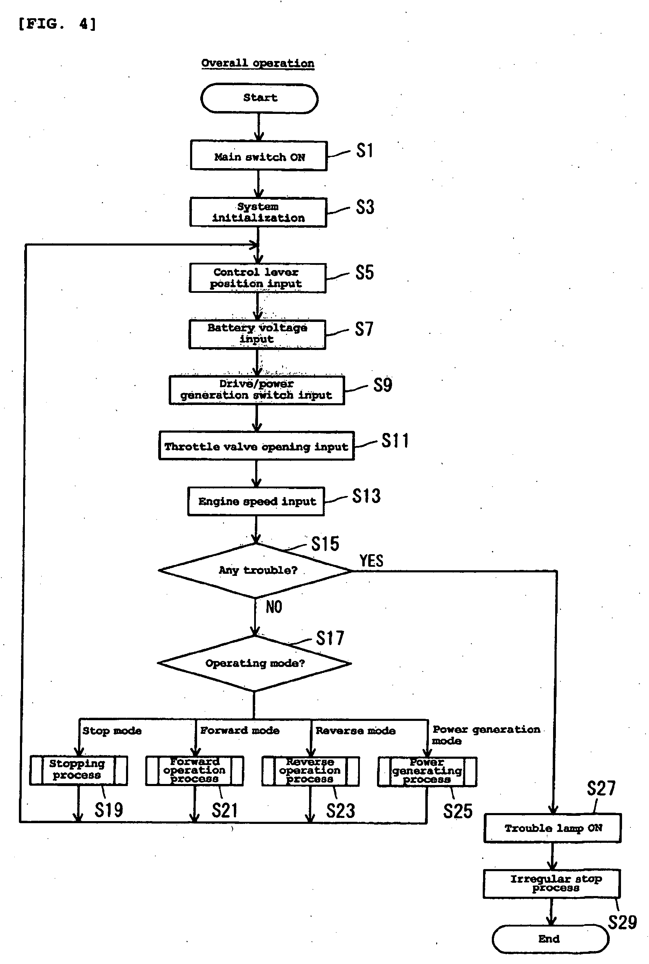

Additionally, the controller 42 includes a memory 42a. A program for implementing the operations shown in FIGs. 4 through 10 are stored in the memory 42a. Further, operation data, a first prescribed value and a second prescribed value that are to be compared with the rpm of the engine 14, a specified value to be compared with the battery voltage, a first threshold and a second threshold, the table data showing the corresponding relation between the position of the control lever 46 and the output power from the source of driving force, and so on are stored in the memory 42a.

In the present embodiment, the control lever 46 represents an instruction means. The controller 42 represents a setting means and a first to a third determination means. The battery voltage sensor 54 represents the charge level detecting means. The engine speed sensor 36 represents the rpm detecting means.

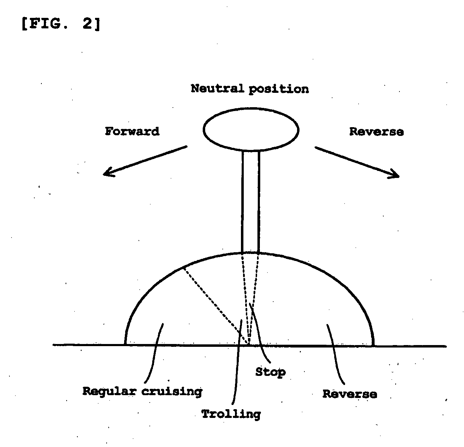

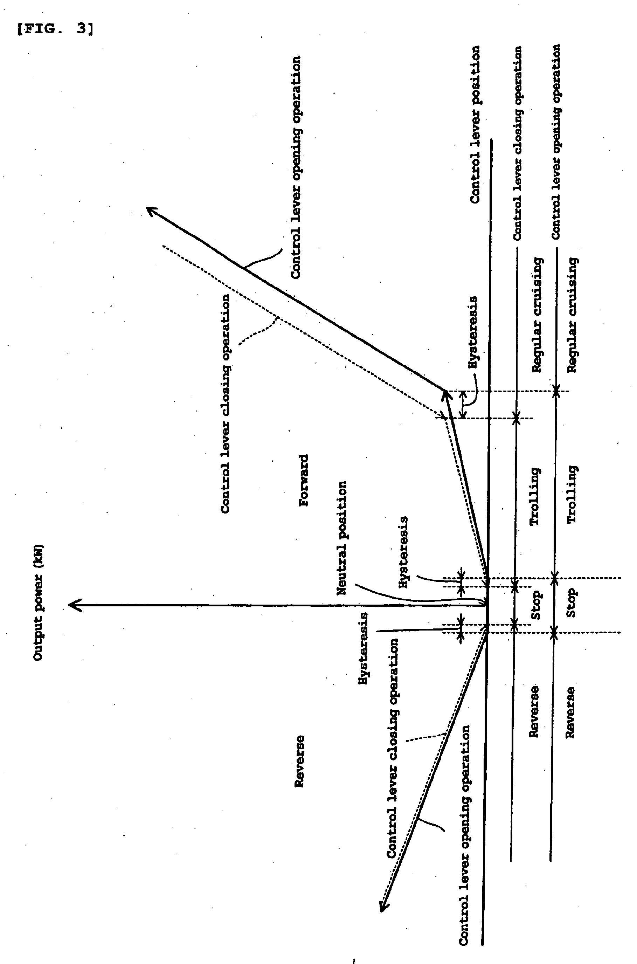

Next, referring to FIGs 2 and 3, the relationship between the position of the control lever 46 and the types of operating mode or the output power from the source of driving force will be described.

As shown in FIG. 2, the control lever 46, rotatable in forward and backward, can give an instruction on the types of operating mode (regular cruising, trolling, stop, or reverse) by its lever position, and at the same time, it can give an instruction on the amount of output power from the source of driving force by its lever position as shown in FIG. 3.

The prescribed range extending in the forward and backward direction around the neutral position of the control lever 46 is a stop mode, the prescribed range in the forward side of the stop mode range is a trolling mode, and the range farther in the forward side of the trolling mode range is a regular cruising mode. Also, the range in the backward section of the stop mode range is a reverse mode. In addition, variation in the output power from the source of driving force relative to the displacement of the control lever 46 is smaller in the trolling mode compared with that in the regular cruising mode.

In this arrangement, instructions for the types of operating mode and the amount of output power from the source of driving force can be given easily and continuously by the rotating operation of the control lever 46, resulting in the remarkable improvement of the controllability. In addition, it facilitates the fine tuning of the output power in the trolling mode, and the speed control in the dead slow speed running.

Further, as shown in FIG. 3, the so called hysteresis is provided by which the mode switching position of the control lever 46 is different in the opening operation that moves the control lever farther from the neutral position in comparison with such position in the closing operation to move the control lever closer to the neutral position. In this way, some "play" is provided in the mode switching process, preventing frequent mode switching around the boundary of the abutting modes.

Overall operation of such watercraft propulsion system will be described with reference to FIG. 4.

First, the system is initialized (step S3) when the main switch 44 is pressed down (step S1). The system initialization includes setting of the electromagnetic clutch 22 at OFF state, for instance.

Next, the lever position signal of the control lever 46 is input into the controller 42 (step S5), and the signal indicating the battery voltage detected by the battery voltage sensor 54 is input into the controller 42 (step S7). Further, the setting signal from the drive / power generation switch 48 is input into the controller 42 (step S9), followed by the input of the signal indicating the opening of the throttle valve 34 (throttle position) detected by the throttle opening sensor 40 (step S11), and the input of the signal indicating the engine rpm detected by the engine speed sensor 36 (step S13). The controller 42 detects any trouble in the watercraft propulsion system 10 based on these input information (step S15), and the operating mode is determined if there is no trouble (step S17).

The stopping process is implemented if the operating mode is the stop mode (step S19), the forward operation process is implemented if it is a forward mode (step S21), the reverse operation process is implemented if it is the reverse mode (step S23), and the power generating process is implemented if it is the power generation mode (step S25). Then, the process returns to the step S5.

On the contrary, if any trouble is detected in the watercraft propulsion system 10 in step S15, the trouble lamp 50 comes on according to the instruction by the controller 42 (step S27), the irregular stop process is implemented (step S29), and the process is terminated.

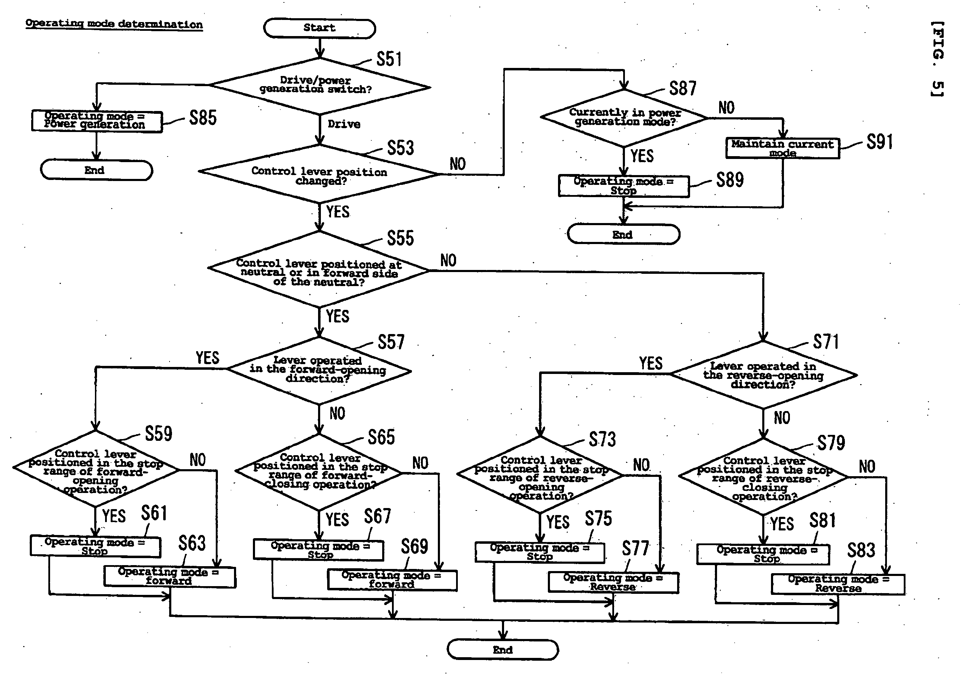

Here, operating mode determination process shown as the step S17 in FIG. 4, will be explained in detail with reference to FIG. 5.

First, the controller 42 determines whether the setting signal from the drive / power generation switch 48 indicates power generation or driving (step S51), and if the signal indicates driving, the controller 42 determines whether the position of the control lever 46 has changed or not (step S53). If the lever position has changed, determination is made whether the control lever 46 is at the neutral position or in the forward side of the neutral position (step S55). If the control lever 46 is at the neutral position or in the forward side of the neutral position, then, determination is made whether the operating direction of the control lever 46 is in the forward-opening direction (step S57). The operating direction of the control lever 46 can be determined based on the lever position in the previous control cycle and that in the present control cycle.

If the operating direction of the lever is determined to be in the forward-opening direction in step S57, then, determination is made whether the control lever 46 is positioned in the stop range associated with the forward-opening operation (step S59). If the lever is positioned in the stop range, the operating mode is determined to be the stop mode (step S61). On the contrary, if the lever is not positioned in the stop range associated with the forward-opening operation in step S59, the operating mode is determined to be the forward mode (step S63). When the operating mode is determined to be the forward mode, it is initially determined to be the trolling mode, and the forward / reverse switching device 26 is set in the forward mode.

If the operating direction of the control lever 46 is determined to be in the forward-closing direction in step S57, then, determination is made whether the lever is positioned in the stop range associated with the forward-closing operation (step S65). If the lever is positioned in the stop range, the operating mode is determined to be the stop mode (step S67). On the contrary, if the lever is not positioned in the stop range associated with the forward-closing operation in step S65, the operating mode is determined to be the forward mode (step S69).

If the control lever 46 is in the reverse side relative to the neutral position in step S55, then, the process goes to step S71. In step S71, determination is made whether the operating direction of the control lever 46 is in the reverse-opening direction, then, if it is in the reverse-opening direction, determination is made whether the lever is positioned in the stop range associated with the reverse-opening operation (step S73). If the lever is positioned in the stop range, the operating mode is determined to be the stop mode (step S75). On the contrary, if the lever is not positioned in the stop range associated with the reverse-opening operation in step S73, the operating mode is determined to be the reverse mode (step S77).

If the operating direction of the control lever 46 is determined to be in the reverse-closing direction in step S71, then, determination is made whether the lever is positioned in the stop range associated with the reverse-closing operation (step S79). Then, if the lever is positioned in the stop range, the operating mode is determined to be the stop mode (step S81). On the contrary, if the lever is not positioned in the stop range associated with the reverse-closing operation in step S79, the operating mode is determined to be the reverse mode (step S83).

Further, if the drive / power generation switch 48 is set for power generation in step S51, the operating mode is determined to be the power generation mode (step S85).

If there is no change in the position of the control lever 46 in step S53, determination is made whether the present mode is the power generation mode or not (step S87). If the present mode is the power generation mode, the operating mode is determined to be the stop mode (step S89). On the other hand, if the present mode is not the power generation mode in step S87, then, the present mode is maintained (step S91).

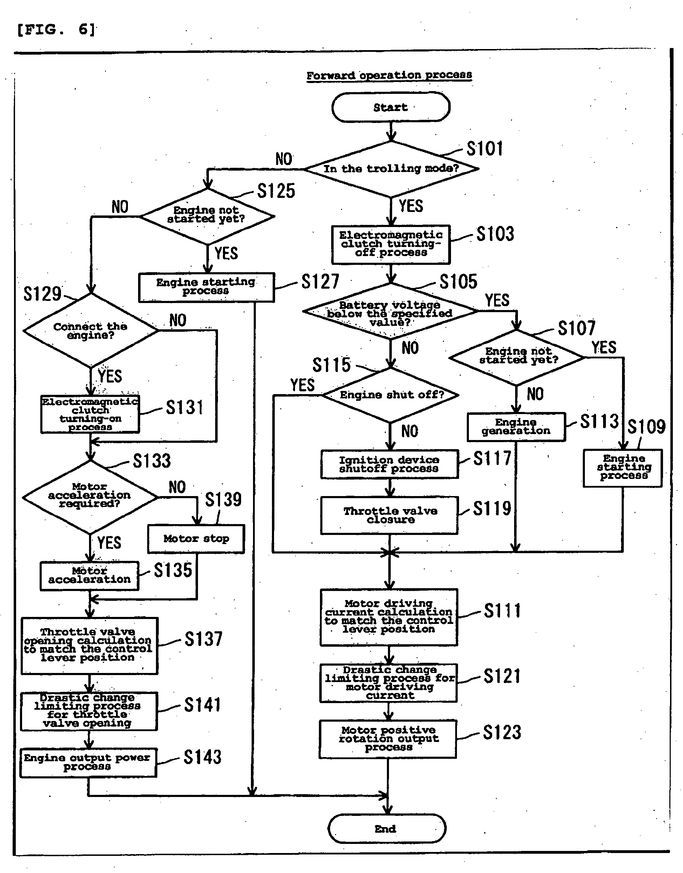

Next, an operation example regarding the forward operation process shown in FIG. 4 as the step S21 will be described with reference to FIG. 6.

First, the controller 42 determines whether the operating mode is the trolling mode or not (step S101). If it is the trolling mode, the controller 42 sets the propeller driving mode to the first mode, in which the propeller 12 is driven by the electric motor 16, and the amount of output power from the electric motor 16 is adjusted according to the instruction given by the control lever 46. In other words, the process goes to step S103, and the following process is implemented.

In step S103, the turning-off process for the electromagnetic clutch 22 is implemented. Then, the controller 42 determines whether the voltage of the battery 52 is below the specified value or not (step S105).

If the battery voltage is below the specified value, the controller 42 determines the motor driving mode to be a third mode, in which the electric motor 16 is driven by the electric power from the battery 52, and in parallel, the electric power obtained by the engine generation is charged into the battery 52. In other words, the process goes to step S107. Then, determination is made in step S107 whether the engine has not been started yet. If the engine has not been started yet, the engine starting process is implemented (step S109), and the process goes to step S111.

On the other hand, if the engine has already been started in step S107, the engine speed is controlled to obtain the prescribed amount of power generation, the engine generation is implemented (step S113), and then, the process goes to step S111.

On the other hand, if the battery voltage exceeds the specified value in step S105, the controller 42 determines the motor driving mode to be in a fourth mode, in which the motor 16 is driven by the electric power from the battery 52. In other words, the process goes to step S115. Since the engine start is not required in the fourth mode, determination is made whether the engine 14 is stopping or not in step S115. If the engine 14 is stopping, the process goes to step S111, but if the engine 14 is running, the shutoff process for the ignition device 32 is implemented (step S117), the throttle valve 34 is closed (S119), and then, the process goes to S111.

In step S111, the controller 42 calculates the electric motor driving current to be supplied to the electric motor 16, with reference to the table data showing the corresponding relations of FIG. 3, so that the motor output power is obtained in response to the position of the control lever 46. Then, the drastic change limiting process is implemented to prevent the electric motor driving current from changing sharply (step S121), the positive rotation output process for the electric motor 16 is implemented (step S123), and the process is terminated.

On the other hand, if the operating mode is not the trolling mode in step S101, it is determined to be the regular cruising mode. Consequently, the controller 42 sets the propeller driving mode to the second mode in which the propeller 12 is driven by the engine 14 and the amount of output power from the engine 14 is adjusted according to the instruction given by the control lever 46. In other words, the process goes to step S125, and the following process is implemented.

Determination is made in step S125 whether the engine has not been started yet. If the engine has not been started yet, the engine starting process is implemented (step S127), and the process is terminated.

If the engine has already been started in step S125, determination is made whether the engine 14 is to be connected or not, namely, whether the electromagnetic clutch 22 is to be turned on or not (step S129). Here, determination is made by the controller 42 based on the criteria that the engine speed is at or higher than the first prescribed value (1200rpm, for example) or not. If the engine speed is at or higher than the first prescribed value, it is determined that the engine 14 can be connected, followed by the implementation of the electromagnetic clutch 22 tuming-on process (step S131), and the process goes to S133. The engine 14 and the propeller 12 are joined when the electromagnetic clutch 22 is turned on.

On the other hand, if the engine speed is below the first prescribed value and the condition does not allow the engine 14 to be connected yet in step S129, then, the process goes to step S133 directly.

In step S133, determination is made whether the acceleration of the electric motor 16 is required or not. Determination is made by the controller 42 based on the criteria that the speed of the engine 14 is at or higher than the second prescribed value (3000rpm, for example) or not. If the speed of the engine 14 is below the second prescribed value, it is determined that the acceleration of the electric motor 16 is required, followed by implementing acceleration of the electric motor 16 (step S135), and then the process goes to step S137. On the other hand, the acceleration of the electric motor 16 is not required in step S133, the electric motor 16 is stopped (step S139), and the process goes to step S137.

In step S137, the controller 42 calculates the opening of the throttle valve 34 with reference to the table data showing the corresponding relations of FIG. 3, so that the engine output power is obtained in response to the position of the control lever 46. Then, the drastic change limiting process is implemented to prevent the opening of the throttle valve 34 from changing sharply (step S141), the output power process for the engine 14 is implemented (step S143), and the process is terminated.

According to the operation example described above, instructions for the types of operating mode as well as the amount of output power from the source of driving force can be given easily and continuously by the rotating operation of the single control lever 46, resulting in the simple control of the engine 14 and the electric motor 16. Especially, when the regular cruising mode is switched to the trolling mode by the control lever 46, transition from the propeller drive by means of the engine 14 into the propeller drive by means of the electric motor 16 can be made smoothly. Further, the shifting between the forward operation and the reverse operation can be made easily by means of the single control lever 46.

Also, the exhaust gas and the noise can be suppressed in trolling, because the propeller 12 is driven by the electric motor 20 when instruction is given to run in the trolling mode.

Further, in the first mode, the electric motor 16 is driven by the electric power supplied by the battery 52 when the battery voltage exceeds the specified value, while the motor 16 is driven by the electric power supplied by the battery 52, and in parallel, the electric power obtained by the engine generation is charged into the battery 52 when the battery voltage is below the specified value. In this way, deterioration of the battery 52 due to over discharge can be prevented.

Additionally, in the first mode, when the electric power is supplied by the engine generation using the engine 14, with the propeller 12 being separated by turning-off the electromagnetic clutch 22, the engine speed can be controlled regardless of the rotational speed of the propeller 12, and the adequate amount of charging power can be obtained.

Further, in the second mode, the engine 14 is connected to the propeller 12 by tuming-on the electromagnetic clutch 22 when the speed of the engine 14 exceeds the first prescribed value, thus the engine 14 is connected to the propeller 12 smoothly. Additionally in the second mode, electric motor 16 is also used to drive the propeller 12 until the speed of the engine 14 reaches the second prescribed value, thus the improved acceleration of the watercraft is attained.

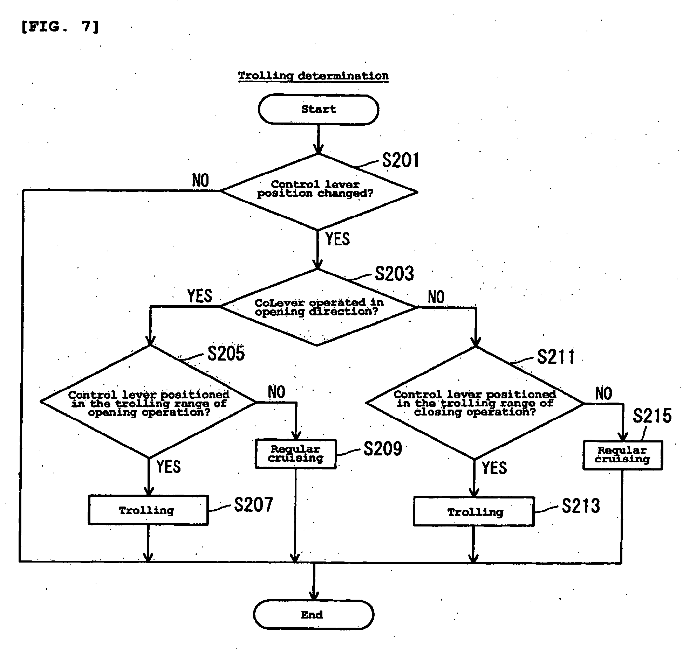

Next, determination process to identify the trolling mode operation will be explained with reference to FIG. 7.

First, the controller 42 determines whether the position of the control lever 46 has changed or not (step S201), and if it has changed, determination is made whether the operating direction of the control lever 46 is in the opening direction (step S203).

If the operating direction of the control lever 46 is in the opening direction, determination is made whether the control lever 46 is positioned in the trolling range associated with the opening operation (step S205), then, if it is in the trolling range, the operating mode is determined to be the trolling mode, and the process is terminated. On the other hand, if the lever is not positioned in the trolling range in step S205, the operating mode is determined to be the regular cruising mode (step S209), and the process is terminated.

If the operating direction of the control lever 46 is determined to be in the closing direction in step S203, determination is made whether the control lever 46 is positioned in the trolling range associated with the closing operation (step S211), then, if it is in the trolling range, the operating mode is determined to be the trolling mode (step S213), and the process is terminated. On the other hand, if the lever is not positioned in the trolling range in step S211, the operating mode is determined to be the regular cruising mode (step S215), and the process is terminated.

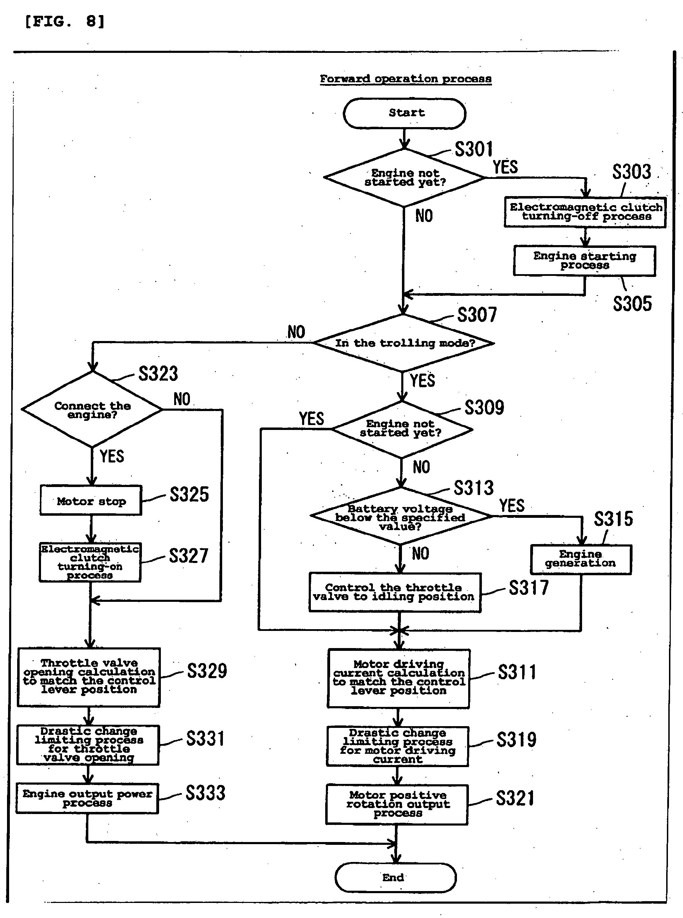

Next, another operation example regarding the forward operation process will be explained with reference to FIG. 8.

First, determination is made whether the engine 14 has not been started yet (step S301). If the engine has not been started yet, turning-off process for the electromagnetic clutch 22 is implemented (step S303), the engine starting process is implemented (step S303), and the process goes to step S307. On the other hand, if the engine has already been started in step S301, the process goes to step S307.

In step S307, determination is made whether the operating mode is the trolling mode or not, and if it is the trolling mode, the controller 42 sets the propeller driving mode to the first mode. Then, the process goes to step S309 to make determination whether the engine has not been started yet (step S309). If the engine has not been started yet, the process goes to step S311, while if the engine has already been started, determination is made whether the voltage of the battery 52 is below the specified value or not (step S313). If the battery voltage is below the specified value, the engine generation is implemented (step S315), and the process goes to step S311.

On the other hand, if the battery voltage exceeds the specified value in step S313, the throttle valve 34 is controlled to the idling position by the controller 42 (step S317), and the process goes to step S311.

In step S311, the controller 42 calculates the electric motor driving current with reference to the table data showing the corresponding relations of FIG. 3, so that the motor output power is obtained in response to the position of the operating lever 46. Then, the drastic change limiting process is implemented to prevent the electric motor driving current from changing sharply (step S319), the positive rotation output process for the electric motor 16 is implemented (step S321), and the process is terminated.

On the other hand, if the operating mode is not the trolling mode in step S307, it is determined to be the regular cruising mode. Then, controller 42 sets the propeller driving mode to the second mode, the process goes to step S323, and the determination is made whether the engine 14 is to be connected or not, namely, whether the electromagnetic clutch 22 is to be turned on or not. If the engine speed is at or higher than the first prescribed value, it is determined that the engine 14 can be connected, and the electric motor 16 is stopped (step S325), followed by the implementation of the electromagnetic clutch 22 tuming-on process (step S327), then the process goes to S329.

On the other hand, if the engine speed is below the first prescribed value and the condition does not allow the engine 14 to be connected yet in step S323, then, the process goes to step S329 directly.

In step S329, the controller 42 calculates the opening of the throttle valve 34 with reference to the table data showing the corresponding relations of FIG. 3, so that the engine output power is obtained in response to the position of the control lever 46. Then, the drastic change limiting process is implemented to prevent the opening of the throttle valve 34 from changing sharply (step S331), the output power process for the engine 14 is implemented (step S333), and the process is terminated.

In this operation example, the engine 14 is operated at idle while the electric motor 16 is driven by the electric power from the battery 52 in the first mode, allowing swift transition to the second mode without re-starting the engine 14 thereafter.

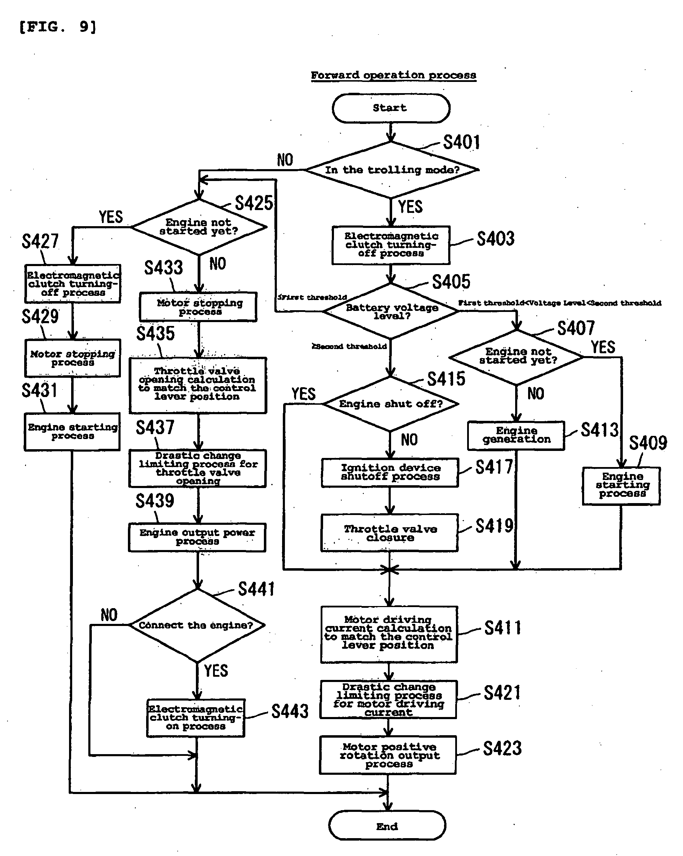

Further, another operation example regarding the forward operation process will be explained with reference to FIG. 9.

First, determination is made whether the operating mode is the trolling mode or not (step S401), and if it is the trolling mode, the turning-off process for the electromagnetic clutch 22 is implemented (step S403). Then, the controller 42 compares the voltage of the battery 52 with the first threshold and the second threshold (step S405). When the first threshold is below the battery voltage (first threshold < battery voltage), the controller 42 sets the propeller driving mode to the first mode.

Especially when the first threshold is below the battery voltage and the battery voltage is below the second threshold (first threshold < battery voltage < second threshold), then, the controller 42 determines the motor driving mode to be the third mode, and the determination is made whether the engine has not been started yet (step S407). If the engine has not been started yet, the engine starting process is implemented (step S409), and the process goes to step S411.

On the other hand, if the engine has already been started in step S407, the engine speed is controlled to obtain the prescribed amount of power generation, the engine generation is implemented (step S413), and then, the process goes to step S111.

When the battery voltage is equal or larger than the second threshold (battery voltage ≥ second threshold) in step S405, then, the controller 42 determines the motor driving mode to be the fourth mode, and the determination is made whether the engine 14 has is stopping or not (step S415). If the engine 14 is stopping, the process goes to step S411, but if the engine 14 is running, the shutoff process for the ignition device 32 is implemented (step S417), the throttle valve 34 is closed (S419), and then, the process goes to S411.

In step S411, the controller 42 calculates the electric motor driving current with reference to the table data showing the corresponding relations of FIG. 3, so that the motor output power is obtained in response to the position of the operating lever 46. Then, the drastic change limiting process is implemented to prevent the electric motor driving current from changing sharply (step S421), the positive rotation output process for the electric motor 16 is implemented (step S423), and the process is terminated.

On the other hand, if the operating mode is not the trolling mode but the regular cruising mode in step S401, or if the battery voltage is equal to or less than the first threshold (battery voltage ≦ first threshold) in step S405 even though the operating mode is the trolling mode, then, the controller 42 sets the propeller driving mode to the second mode, the process goes to S425, and the determination is made whether the engine has not been started yet. If the engine has not been started yet, the turning-off process for the electromagnetic clutch 22 is implemented (step S427), the stopping process for the electric motor 16 is implemented (step S429), the engine starting process is implemented (S431), and the process is terminated.

If the engine has already been started in step S425, the electric motor stopping process is implemented (step S433). Then, the controller 42 calculates the opening of the throttle valve 34 with reference to the table data showing the corresponding relations of FIG. 3, so that the engine output power is obtained in response to the position of the control lever 46 (step S435), the drastic change limiting process is implemented to prevent the opening of the throttle valve 34 from changing sharply (step S437), and the output power process for the engine 14 is implemented (step S439). Then, determination is made whether the engine 14 is to be connected or not, namely, whether the electromagnetic clutch 22 is to be turned on or not (step S442). If the engine speed is at or higher than the first prescribed value, it is determined that the engine 14 can be connected, followed by the implementation of the electromagnetic clutch 22 turning-on process (step S443), and the process is terminated. On the other hand, if the engine speed is below the first prescribed value and the condition does not allow the engine 14 to be connected yet in step S441, the process is terminated.

According to this operation example, the propeller drive mode is set to the first mode or to the second mode taking account of not only the operating mode, but also comparison between the battery voltage and the first threshold. For instance, even if the operating mode is instructed to be the trolling mode, sometimes it is hard to drive the propeller 12 by the electric motor 16 in the first mode when the battery voltage is equal to or below the first threshold (battery voltage≦first threshold). In such cases, the second mode can be used to drive the propeller 12.

Also in the first mode, the electric motor 16 is driven by the electric power from the battery 52 when the battery voltage is equal to or larger than the second threshold (battery voltage ≧ second threshold), or the electric motor 16 is driven by the battery while the battery is being charged by the engine generation when the first threshold is less than the battery voltage, and the battery voltage is less than the second threshold (first threshold < battery voltage < second threshold). Thus, deterioration of the battery due to over discharge can be prevented.

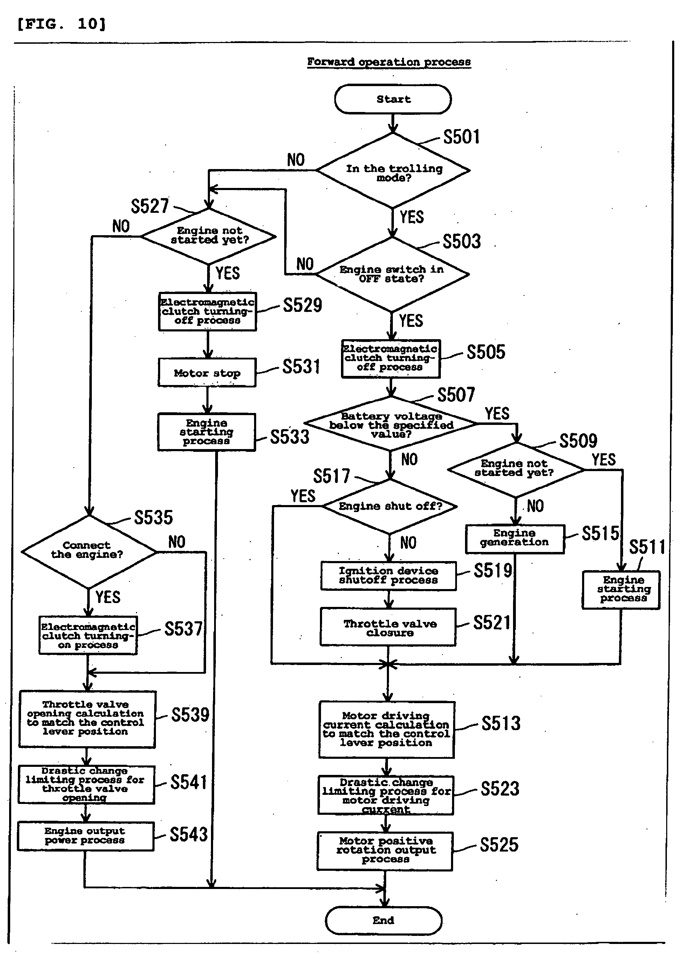

Further, still another operation example regarding the forward operation process will be explained with reference to FIG. 10.

To implement this operation, the engine watercraft propulsion system 10 is further provided with an engine switch 56 connected to the controller 42 as shown in FIG. 1. The engine switch 56 represents a switching means to change between using or not using the electric motor 16 for driving the propeller.

First, the controller 42 determines whether the operating mode is the trolling mode or not (step S501), and if it is the trolling mode, determination is made whether the engine switch 56 is turned off or not (step S503). If he engine switch 56 is turned off, the controller 42 sets the propeller driving mode to the first mode, then, the process goes to S505, and the turning-off process for the electromagnetic clutch 22 is implemented. Further, the determination is made whether the voltage of the battery 52 is below the specified value or not (step S507). If the battery voltage is below the specified value, the controller 42 determines the motor driving mode to be the third mode, and the determination is made whether the engine has not been started yet (step S509). If the engine has not been started yet, the engine starting process is implemented (step S511), and the process goes to step S513.

On the other hand, if the engine has already been started in step S509, the engine speed is controlled to obtain the prescribed amount of power generation, the engine generation is implemented (step S515), and then, the process goes to step S513.

On the other hand, if the battery voltage exceeds the specified value in step S405, then, the controller 42 determines the motor driving mode to be the fourth mode, and the determination is made whether the engine 14 is stopping or not (step S517). If the engine 14 is stopping, the process goes to step S513, but if the engine 14 is running, the shutoff process for the ignition device 32 is implemented (step S519), the throttle valve 34 is closed (S521), and then, the process goes to S513.

In step S513, the controller 42 calculates the electric motor driving current with reference to the table data showing the corresponding relations of FIG. 3, so that the motor output power is obtained in response to the position of the operating lever 46. Then, the drastic change limiting process is implemented to prevent the electric motor driving current from changing sharply (step S523), the positive rotation output process for the electric motor 16 is implemented (step S525), and the process is terminated.

On the other hand, if the operating mode is not the trolling mode but the regular cruising mode in step S501, or if the engine switch 56 is turned on in step S503 even though the operating mode is the trolling mode, then, the controller 42 sets the propeller driving mode to the second mode, the process goes to S527, and the determination is made whether the engine has not been started yet (step S527). If the engine has not been started yet in step S527, the turning-off process for the electromagnetic clutch 22 is implemented (stepS529), the electric motor 16 is stopped (step S531), the engine starting process is implemented (step S533), and the process is terminated.

If the engine has already been started in step S527, determination is made whether the engine 14 is to be connected or not, namely, whether the electromagnetic clutch 22 is to be turned on or not (step S535). If the engine speed is at or higher than the first prescribed value, it is determined that the engine 14 can be connected, followed by the implementation of the electromagnetic clutch 22 tuming-on process (step S537), and the process goes to S539.

On the other hand, if the engine speed is below the first prescribed value and the condition does not allow the engine 14 to be connected yet in step S535, then, the process goes to step S539 directly.

In step S539, the controller 42 calculates the opening of the throttle valve 34 with reference to the table data showing the corresponding relations of FIG. 3, so that the engine output power is obtained in response to the position of the control lever 46. Then, the drastic change limiting process is implemented to prevent the opening of the throttle valve 34 from changing sharply (step S541), the output power process for the engine 14 is implemented (step S543), and the process is terminated.

According to this operation example, if the engine switch 56 is turned on in advance to avoid the use of electric motor 16, the propeller 12 can be driven in the second mode, namely driven by the engine 14, even if the operating mode is the trolling mode, allowing a flexible response to the operator's demand.

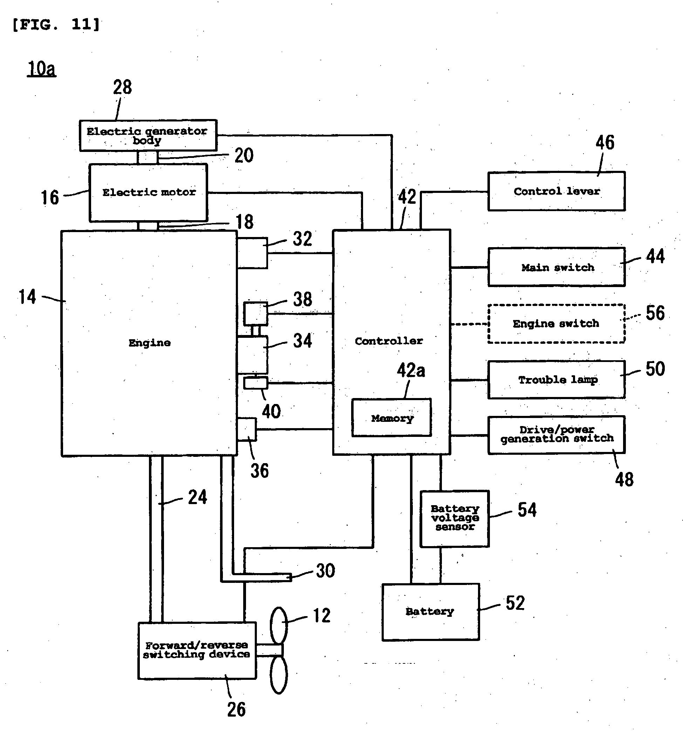

Next, a watercraft propulsion system 10a according to another embodiment will be described with reference to FIG. 11.

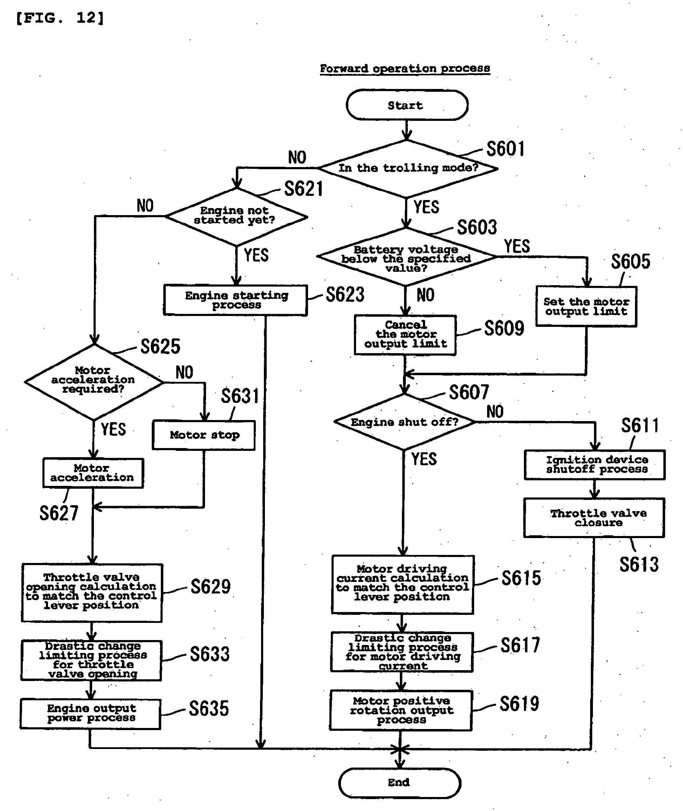

The watercraft propulsion system 10a is configured as the motor on top type in which the electric motor 16 is provided on the top of the engine 14 without using the electromagnetic clutch 22. In addition, the driveshaft 24 is joined to the lower end of the crankshaft 8 of the engine 14, the rotor 20 of the electric motor 16 is joined to the upper end of the crankshaft 18, and the electric generator body 28 is provided on the upper end of the rotor 20. A program for implementing the operations shown in FIGs. 12 through 14, and other items are stored in the memory 42a. The controller 42 represents the setting means and the third to the fourth determination means. The rest of the configuration is the same as the watercraft propulsion system 10, and the description for the duplicated part will be skipped.

An operation example regarding the forward operation process of the watercraft propulsion system 10a will be described with reference to FIG. 12.

First, determination is made whether the operating mode is the trolling mode or not (step S601). If it is the trolling mode, the controller 42 sets the propeller driving mode to the first mode, the process goes to S603, and the controller 42 determines whether the voltage of the battery 52 is below the specified value or not (step S603).

If the battery voltage is below the specified value, the controller 42 determines that the motor driving mode to be a fifth mode, in which the output power of the electric motor 16 is restricted so that it is driven by the electric power from the battery 52. In other words, the process goes to step S605. The restriction on the output power of the electric motor 16 is set in step S605, and the process goes to step S607.

On the other hand, if the battery voltage is not below the specified value, the controller 42 determines the motor driving mode to be a sixth mode, in which the electric motor 16 is driven by the electric power from the battery 52 without restricting the output power of the electric motor 16. In other words, the process goes to step S609. The restriction on the output power of the electric motor 16 is removed in step S609, and the process goes to step S607.

In step S607, determination is made whether the engine 14 is stopping or not. If the engine 14 is running, the shutoff process for the ignition device 32 is implemented (step S611), the throttle valve 34 is closed (S613), and the process is terminated.

On the other hand, if the engine 14 is stopping in step S607, the controller 42 calculates the electric motor driving current with reference to the table data showing the corresponding relations of FIG. 3, so that the motor output power is obtained in response to the position of the operating lever 46 (step S615). Then, the drastic change limiting process for motor driving current is implemented (step S617), the positive rotation output process for the electric motor 16 is implemented (step S619), and the process is terminated.

On the other hand, if the operating mode is not the trolling mode in step S601, it is determined to be the regular cruising mode. Then, controller 42 sets the propeller driving mode to the second mode, the process goes to step S621, and the determination is made whether the engine has not been started yet. If the engine has not been started yet, the engine starting process is implemented (step S623) using the electric motor 16 provided on the top of the engine 14 as a starter motor, and then, the process is terminated. On the other hand, if the engine has already been started in step S621, determination is made whether the acceleration of the electric motor 16 is required or not. If the acceleration of the electric motor 16 is required, the electric motor 16 is accelerated (step S627) and the process goes to S629. On the other hand, the acceleration of the electric motor 16 is not required in step S625, the electric motor 16 is stopped (step S631), and the process goes to step S629.

In step S629, the controller 42 calculates the opening of the throttle valve 34 with reference to the table data showing the corresponding relations of FIG. 3, so that the engine output power is obtained in response to the position of the control lever 46. Then, the drastic change limiting process is implemented to prevent the opening of the throttle valve 34 from changing sharply (step S633), the output power process for the engine 14 is implemented (step S635), and the process is terminated.

According to this operation example, the propeller 12 can be driven without fail by adjusting the output power of the electric motor 16 in response to the battery voltage in the first mode, and the trolling operation can be implemented by means of the electric motor 16.

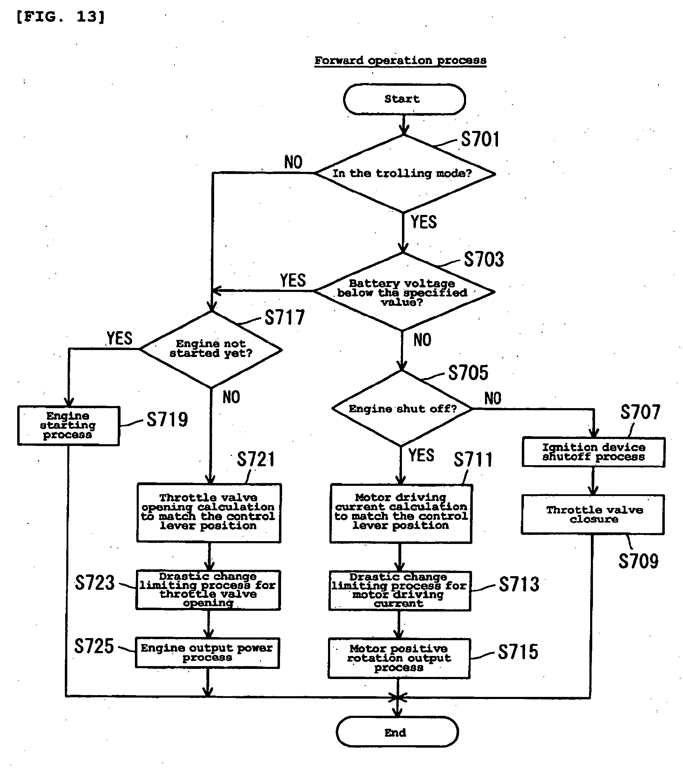

Next, another operation example regarding the forward operation process will be explained with reference to FIG. 13.

First, determination is made whether the operating mode is the trolling mode or not (step S701). If it is the trolling mode, the process goes to S703, and the controller 42 determines whether the voltage of the battery 52 is below the specified value or not. If the battery voltage exceeds the specified value, then, the controller 42 sets the propeller driving mode to the first mode, and the determination is made whether the engine 14 is stopping or not (step S705). If the engine 14 is running, the shutoff process for the ignition device 32 is implemented (step S707), the throttle valve 34 is closed (S709), and the process is terminated.

On the other hand, if the engine 14 is stopping in step S705, the controller 42 calculates the electric motor driving current with reference to the table data showing the corresponding relations of FIG. 3, so that the motor output power is obtained in response to the position of the operating lever 46 (step S711). Then, the drastic change limiting process for motor driving current is implemented (step S713), the positive rotation output process for the electric motor 16 is implemented (step S715), and the process is terminated.

On the other hand, if the operating mode is not the trolling mode but the regular cruising mode in step S701, or if the battery voltage is equal to or less than the specified value (battery voltage ≦ specified value) in step S703 even though the operating mode is the trolling mode, then, the controller 42 sets the propeller driving mode to the second mode, the process goes to S717, and the determination is made whether the engine has not bee started yet. If the engine has not been started yet, the engine starting process is implemented (step S719) using the electric motor 16 provided on the top of the engine 14 as a starter motor, and then, the process is terminated. On the other hand, the engine has already been started in step S717, the controller 42 calculates the opening of the throttle valve 34 with reference to the table data showing the corresponding relations of FIG. 3, so that the engine output power is obtained in response to the position of the control lever 46 (step S721). Then, the drastic change limiting process is implemented to prevent the opening of the throttle valve 34 from changing sharply (step S723), the output power process for the engine 14 is implemented (step S725), and the process is terminated.

According to this operation example, the propeller drive mode is set to the first mode or to the second mode taking account of not only the operation mode, but also comparison between the battery voltage and the specified value. For instance, even if the operating mode is instructed to be the trolling mode, sometimes it is hard to drive the propeller 12 by the electric motor 16 using the first mode when the battery voltage is equal to or below the specified value (battery voltage ≦ specified value). In such cases, the second mode can be used to drive the propeller 12.

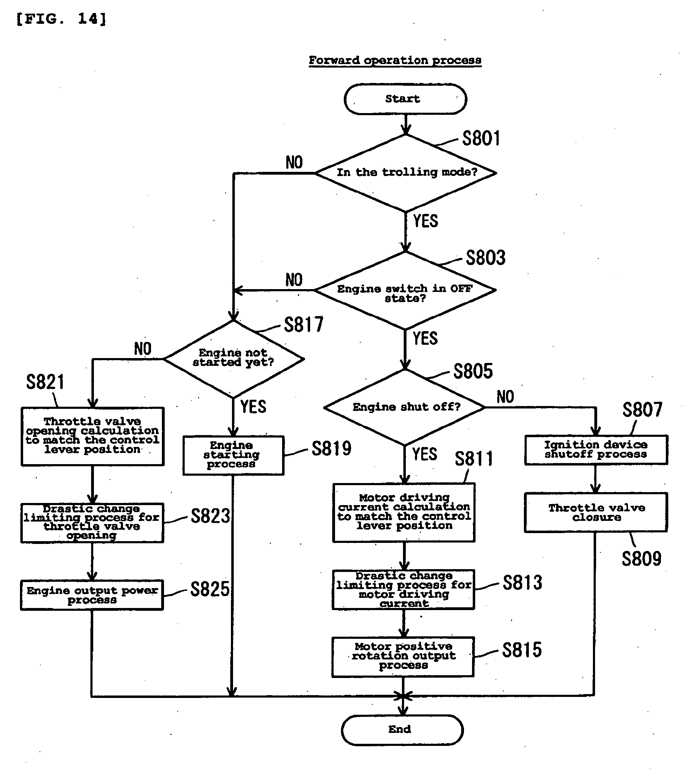

Further, still another operation example regarding the forward operation process will be explained with reference to FIG. 14.

To implement this operation, the watercraft propulsion system 10a is further provided with an engine switch 56 connected to the controller 42 as shown in FIG. 11.

First, determination is made whether the operating mode is the trolling mode or not (step S801), and if it is the trolling mode, determination is made whether the engine switch 56 is turned off or not (step S803). If he engine switch 56 is turned off, the controller 42 sets the propeller driving mode to the first mode, then, the process goes to S805, and determination is made whether the engine 14 is stopping or not. If the engine 14 is running, the shutoff process for the ignition device 32 is implemented (step S807), the throttle valve 34 is closed (S809), and the process is terminated.

If the engine 14 is stopping in step S805, the controller 42 calculates the electric motor driving current with reference to the table data showing the corresponding relations of FIG. 3, so that the motor output power is obtained in response to the position of the operating lever 46 (step S811). Then, the drastic change limiting process is implemented to prevent the electric motor driving current from changing sharply (step S813), the positive rotation output process for the electric motor 16 is implemented (step S815), and the process is terminated.

On the other hand, if the operating mode is not the trolling mode but the regular cruising mode in step S801, or if the engine switch 56 is turned on in step S803 even though the operating mode is the trolling mode, then, the controller 42 sets the propeller driving mode to the second mode, the process goes to S817, and the determination is made whether the engine has not bee started yet (step S817). If the engine has not been started yet, the engine starting process is implemented (step S819) using the electric motor 16 provided on the top of the engine 14 as a starter motor, and then, the process is terminated. On the other hand, the engine has already been started in step S817, the controller 42 calculates the opening of the throttle valve 34 with reference to the table data showing the corresponding relations of FIG. 3, so that the engine output power is obtained in response to the position of the control lever 46 (step S821). Then, the drastic change limiting process is implemented to prevent the opening of the throttle valve 34 from changing sharply (step S823), the output power process for the engine 14 is implemented (step S825), and the process is terminated.

According to this operation example, if the engine switch 56 is turned on in advance to avoid the use of electric motor 16, the propeller 12 can be driven in the second mode, namely driven by the engine 14, even if the operating mode is the trolling mode, allowing a flexible response to the operator's demand.

It should be noted that the instruction means may be a joystick lever.

Also, the battery voltage sensor 54 is used as the charge level detecting means in the embodiments described above, however, the charge level detecting means is not limited to the battery voltage sensor 54, but some other means may be employed which detects the battery charge level based on the electric current and the elapsed time, for instance.
The description above discloses, amongst others, in order to attain the objective described above, an embodiment of a watercraft propulsion system including an engine and an electric motor as a source of driving force for a propeller, and having an instruction means for giving instructions regarding the types of operating mode as well as the amount of output power from the source of driving force, along with a setting means for setting the propeller driving mode according to the instruction given by the instruction means, and is characterized in that the setting means sets a propeller driving mode to a first mode when a trolling mode is instructed by the instruction means, in which the propeller is driven by the electric motor, and the amount of output power from the electric motor is adjusted according to the instruction given by the instruction means, while on the other hand, the setting means sets the propeller driving mode to a second mode when a regular cruising mode is instructed by the instruction means, in which the propeller is driven by an engine, and the amount of output power from the engine is adjusted according to the instruction given by the instruction means. (Embodiment 1)
Preferably, the instruction means includes a control lever that is rotatable and able to give instructions regarding the types of operating mode and the amount of output power from the source of driving force by means of the lever position. (Embodiment 2)
Further, preferably the variation of the electric motor output power relative to the displacement of the control lever in the trolling mode is set to be smaller than the variation of the engine output power relative to the displacement of the control lever in the regular cruising mode. (Embodiment 3)
Still further, preferably a battery for accumulating electric power to be supplied to the electric motor, a charge level detecting means for detecting the amount of electricity remaining in the battery, and a first determination means for determining whether the electric power should be charged to the battery by using the engine generation based on the result from the detection by the charge level detecting means are included additionally. (Embodiment 4)
Yet further, preferably connection between the engine and the propeller is disengaged in the first mode. (Embodiment 5)
Beneficially, an rpm (revolutions per minute) detecting means for detecting the engine speed, and a second determination means for determining in the second mode whether the engine should be connected to the propeller or not based on comparison between the result from the detection by the rpm detecting means and a first prescribed value, are included additionally. (Embodiment 6)
Further, beneficially a third determination means is further included for determining in the second mode if the propeller should be driven by utilizing the accelerating electric motor as well, or alternatively the propeller should be driven without running the electric motor, based on comparison between the result from the detection by the rpm detecting means and a second prescribed value. (Embodiment 7)
Still further, beneficially the engine is operated at idle when the electric motor is driven by the electric power from the battery in the first mode. (Embodiment 8)
Yet further, beneficially the battery for accumulating the electric power to be supplied to the electric motor and the charge level detecting means for detecting the amount of electricity remaining in the battery are further included, and the setting means sets the propeller driving mode to the first mode or to the second mode, additionally taking account of comparison between the result from the detection by the charge level detecting means and the first threshold. (Embodiment 9)
Further, preferably the first determination means is further included for determining in the first mode if the electric power should be charged to the battery by means of the engine generation based on comparison between the result from the detection by the charge level detecting means and the second threshold. (Embodiment 10)
Further, preferably a switching means for alternatively selecting to use or not the electric motor for driving the propeller is further included, and the setting means sets the propeller driving mode to the first mode or to the second mode, additionally taking account of the setting selected by the switching means. (Embodiment 11)
Further, preferably the battery for accumulating electric power to be supplied to the electric motor, the charge level detecting means for detecting the amount of electricity remaining in the battery, and a fourth determination means for determining in the first mode whether the electric motor should be driven by the electric power from the battery without restricting the output power of the electric motor, or otherwise the electric motor should be driven by the electric power from the battery restricting the output power of the electric motor based on the result from the detection by the charge level detecting means, are included additionally. (Embodiment 12)
There is further disclosed an operating method for a watercraft propulsion system including an engine and an electric motor as a source of driving force for a propeller has a first step in which an instruction is received regarding the types of operating mode as well as the amount of output power from the source of driving force and a second step in which a setting is made for a propeller driving mode according to the instruction received in the first step, and is characterized in that in the second step, the propeller driving mode is set to the first mode when a trolling mode is instructed in the first step, in which the propeller is driven by the electric motor and the amount of output power from the electric motor is adjusted according to the instruction received in the first step, while on the other hand, the propeller driving mode is set to the second mode when a regular cruising mode is instructed in the first step, in which the propeller is driven by the engine, and the amount of output power from the engine is adjusted according to the instruction received in the first step. (Embodiment 13)

According to the watercraft propulsion system in embodiment 1, the instructions can be given simultaneously regarding the types of operating mode and the amount of output power from the source of driving force, thus, the engine and the electric motor serving as the source of driving force can be controlled easily. Also, the exhaust gas and the noise can be suppressed in trolling, because the propeller is driven by the electric motor when instruction is given to run in the trolling mode. The above description is also applicable to the operating method for the watercraft propulsion system in embodiment 13.

According to the watercraft propulsion system in embodiment 2, instructions for the types of operating mode and the amount of output power from the source of driving force can be given easily and continuously by the rotating operation of the control lever, resulting in a remarkable improvement of the controllability.

According to the watercraft propulsion system in embodiment 3, the variation of the electric motor output power relative to the displacement of the control lever in the trolling mode is set to be smaller than the variation of the engine output power relative to the displacement of the control lever in the regular cruising mode. This allows fine-tuning of the output power in the trolling mode.

According to the watercraft propulsion system in embodiment 4, in the first mode, the electric motor is driven by the electric power supplied by the battery when the battery charge level is sufficient, while on the other hand, the motor is driven by the electric power supplied by the battery, and in parallel, the electric power obtained by the engine generation is charged into the battery when the battery charge level is relatively low. In this way, deterioration of the battery due to over discharge can be prevented.

According to the watercraft propulsion system in embodiment 5, when the electric power is supplied by the engine generation in the first mode, the engine speed can be controlled regardless of the rotational speed of the propeller, and the adequate amount of charging power can be obtained.

According to the watercraft propulsion system in embodiment 6, the engine is connected to the propeller when the engine speed exceeds the first prescribed value in the second mode, thus, the engine is connected to the propeller smoothly.

According to the watercraft propulsion system in embodiment 7, the electric motor is also used to drive the propeller until the engine speed reaches the second prescribed value in the second mode, thus, the improved acceleration of the boat is attained.

According to the watercraft propulsion system in embodiment 8, the engine is operated at idle while the electric motor is driven by the electric power from the battery in the first mode, thus, swift transition to the second mode is assured afterward without re-starting the engine.

According to the watercraft propulsion system in embodiment 9, the propeller drive mode is set to the first mode or to the second mode, taking account of not only the operation mode, but also comparison between the result from the detection by the charge level detecting means and the first threshold. For instance, even if the operation mode is instructed to be the trolling mode, sometimes it is hard to drive the propeller by the electric motor using the first mode when the battery charge level is substantially low. In such cases, the second mode can be used to drive the propeller.

According to the watercraft propulsion system in embodiment 10, in the first mode, the electric motor is driven by the electric power supplied by the battery when the battery charge level is sufficient, while on the other hand, the motor is driven by the electric power supplied by the battery, and in parallel, the electric power obtained by the engine generation is charged into the battery when the battery charge level is relatively low. In this way, deterioration of the battery due to over discharge can be prevented.

According to the watercraft propulsion system in embodiment 11, if the setting is made in advance to avoid the use of electric motor, the propeller can be driven in the second mode even when the operating mode is the trolling mode. Thus, a flexible response to the operator's demand can be implemented.

According to the watercraft propulsion system in embodiment 12, the propeller can be driven without fail by adjusting the output power of the electric motor in response to the battery charge level in the first mode.

By the way, the "trolling mode" when used in the present teaching refers to the condition in which a watercraft is propelled forward in dead slow speed between 0 knot and several knots per hour.

Also, the "regular cruising mode" refers to the condition in which a watercraft is propelled in speed range greater than the trolling mode.

According to the present teaching, the engine and the electric motor can be controlled easily, and at the same time, the exhaust gas and the noise emission can be suppressed during the trolling operation.

Further, according to a preferred first aspect, there is disclosed a watercraft propulsion system including an engine and an electric motor as a source of driving force for a propeller, comprising: an instruction means for giving instructions regarding the types of operating mode as well as the amount of output power from the source of driving force; and a setting means for setting a propeller driving mode according to the instruction given by the instruction means; wherein the setting means sets a propeller driving mode to a first mode when a trolling mode is instructed by the instruction means, in which the propeller is driven by the electric motor, and the amount of output power from the electric motor is adjusted according to the instruction given by the instruction means, while the setting means sets the propeller driving mode to a second mode when a regular cruising mode is instructed by the instruction means, in which the propeller is driven by the engine, and the amount of output power from the engine is adjusted according to the instruction given by the instruction means.

Further, according to a preferred second aspect, there is disclosed the watercraft propulsion system according to the first aspect, wherein the instruction means includes a control lever that is rotatable and able to give instructions regarding the types of operating mode and the amount of output power from the source of driving force by means of the lever position.

Further, according to a preferred third aspect, there is disclosed the watercraft propulsion system according to the second aspect, wherein the variation of the electric motor output power relative to the displacement of the control lever in the trolling mode is set to be smaller than the variation of the engine output power relative to the displacement of the control lever in the regular cruising mode.

Further, according to a preferred fourth aspect, there is disclosed the watercraft propulsion system according to the first aspect, further comprising: a battery for accumulating electric power to be supplied to the electric motor; a charge level detecting means for detecting the amount of electricity remaining in the battery; and a first determination means for determining in the first mode whether the electric power should be charged to the battery by using the engine generation or not based on the result from the detection by the charge level detecting means.

Further, according to a preferred fifth aspect, there is disclosed the watercraft propulsion system according to the fourth aspect, wherein connection between the engine and the propeller is disengaged in the first mode.

Further, according to a preferred sixth aspect, there is disclosed the watercraft propulsion system according to the first aspect, further comprising: an rpm (revolutions per minute) detecting means for detecting the engine speed; and a second determination means for determining in the second mode whether the engine should be connected to the propeller or not based on comparison between the result from the detection by the rpm detecting means and a first prescribed value.

Further, according to a preferred seventh aspect, there is disclosed the watercraft propulsion system according to the first aspect, further comprising a third determination means for determining in the second mode if the propeller should be driven by utilizing the accelerating electric motor as well, or alternatively the propeller should be driven without running the electric motor, based on comparison between the result from the detection by the rpm detecting means and a second prescribed value.

Further, according to a preferred eighth aspect, there is disclosed the watercraft propulsion system according to the first aspect, wherein the engine is operated at idle when the electric motor is driven by the electric power from the battery in the first mode.

Further, according to a preferred ninth aspect, there is disclosed the watercraft propulsion system according to the first aspect, further comprising: a battery for accumulating the electric power to be supplied to the electric motor; and a charge level detecting means for detecting the amount of electricity remaining in the battery, wherein the setting means sets the propeller driving mode to the first mode or to the second mode, additionally taking account of comparison between the result from the detection by the charge level detecting means and a first threshold.

Further, according to a preferred tenth aspect, there is disclosed the watercraft propulsion system according to the ninth aspect, further comprising the first determination means for determining in the first mode whether the electric power should be charged to the battery by means of the engine generation based on comparison between the result from the detection by the charge level detecting means and a second threshold.

Further, according to a preferred eleventh aspect, there is disclosed the watercraft propulsion system according to the first aspect, further comprising a switching means for alternatively selecting to use or not to use the electric motor for driving the propeller, wherein the setting means sets the propeller driving mode to the first mode or to the second mode, additionally taking account of the setting selected by the switching means.

Further, according to a preferred twelfth aspect, there is disclosed the watercraft propulsion system according to the first aspect, further comprising: a battery for accumulating electric power to be supplied to the electric motor; a charge level detecting means for detecting the amount of electricity remaining in the battery: and a fourth determination means for determining in the first mode whether the electric motor should be driven by the electric power from the battery without restricting the output power of the electric motor, or the electric motor should be driven by the electric power from the battery restricting the output power of the electric motor based on the result from the detection by the charge level detecting means.

Further, according to a preferred thirteenth aspect, there is disclosed an operating method for a watercraft propulsion system including an engine and an electric motor as a source of driving force for a propeller, comprising: a first step in which an instruction is received regarding the types of operating mode as well as the amount of output power from the source of driving force; and a second step in which a setting is made for the propeller driving mode according to the instruction received in the first step; wherein in the second step, the propeller driving mode is set to the first mode when the trolling mode is instructed in the first step, in which the propeller is driven by the electric motor and the amount of output power from the electric motor is adjusted according to the instruction received in the first step, while the propeller driving mode is set to the second mode when the regular cruising mode is instructed in the first step, in which the propeller is driven by the engine, and the amount of output power from the engine is adjusted according to the instruction received in the first step.

Further, according to a further preferred embodiment, in order to provide a watercraft propulsion system and its operating method by which an engine and an electric motor can be controlled easily, and at the same time the exhaust gas and the noise during a trolling operation can be suppressed, there is disclosed a watercraft propulsion system 10 which is provided with a control lever 46 for giving instructions regarding the types of operating mode as well as the amount of output power from a source of driving force, and a controller 42 for setting a propeller driving mode according to the instruction given by the control lever 46. The controller 42 sets the propeller driving mode to a first mode when a trolling mode is instructed by the control lever 46, in which a propeller 12 is driven by an electric motor 16, and the amount of output power from the electric motor 16 is adjusted according to the instruction given by the control lever 46, while the controller 42 sets the propeller driving mode to a second mode when a regular cruising mode is instructed by the control lever 46, in which the propeller 12 is driven by an engine 14, and the amount of output power from the engine 14 is adjusted according to the instruction given by the control lever 46.

## Claims

1. Hybrid-type watercraft propulsion system (10, 10a) having an engine (14) and an electric motor (16) as a source of driving force for a propeller (12) and comprising a setting means (42) configured to set a propeller driving mode according to instructions input via a single instruction means (46), said single instruction means (46) being adapted for mutual input of instructions regarding the operating mode of the system as well as an amount of output power of the driving source,
**characterized in that** the instruction means (46) includes a rotatable control lever (46) configured to receive instructions regarding the types of operating mode, as well as the amount of output power from the source of driving force by means.of the lever position.

2. Hybrid-type watercraft propulsion system according to claim 1, wherein the setting means (42) is configured to set a first propeller driving mode, in which the propeller (12) is driven by the electric motor (16), when a trolling mode is instructed via the instruction means (46), and is configured to adjust the amount of output power of the electric motor (16) according to these instructions via the instruction means (46).

3. Hybrid-type watercraft propulsion system (10, 10a) according to claim 2, wherein the setting means (42) is configured to set a second propeller driving mode, in which the propeller (12) is driven by the engine (14), when a regular cruising mode is instructed, and is configured to adjust the amount of output power of the engine (14) according to these instructions via the instruction means (46).

4. Hybrid-type watercraft propulsion system (10, 10a) according to claim 2 or 3, wherein in the first propeller driving mode, the only driving source for driving the propeller is the electric motor (16).

5. Hybrid-type watercraft propulsion system (10, 10a) according to claim 1, wherein a prescribed range extending in forward and backward directions around a neutral position of the control lever (46) is a stop mode, a prescribed range in the forward side of the stop mode range is a trolling mode, and a range farther in the forward side of the trolling mode range is a regular cruising mode, and a range in the backward section of the stop mode range is a reverse mode.

6. Hybrid-type watercraft propulsion system (10, 10a) according to claim 1 or 5, wherein a variation of the electric motor output power relative to the displacement of the control lever (46) in the trolling mode is set to be smaller than a variation of the engine output power relative to the displacement of the control lever (46) in the regular cruising mode.

7. Hybrid-type watercraft propulsion system (10, 10a) according to one of the claims 1 to 6, wherein a hysteresis is provided, by which the mode switching position of the control lever (46) is different in the opening operation that moves the control lever (46) farther from the neutral position in comparison with such position in the closing operation to move the control lever (46) closer to the neutral position.

8. Hybrid-type watercraft propulsion system (10, 10a) according to one of the claims 1 to 7, further comprising a clutch (22) provided between the engine (14) and the electric motor (16), wherein the electric motor (16) is disposed between the engine (14) and the propeller (12).

9. Hybrid-type watercraft propulsion system according to one of the claims 1 to 8, further comprising a battery for accumulating electric power to be supplied to the electric motor; and a charge level detecting means for detecting the amount of electricity remaining in the battery; and a first determination means for determining in the first propeller driving mode whether the electric power should be charged to the battery by using the engine generation or not based on the result from the detection by the charge level detecting means.

10. Hybrid-type watercraft propulsion system (10, 10a) according to claim 9, wherein connection between the engine (14) and the propeller (12) is disengaged in the first propeller driving mode.

11. Hybrid-type watercraft propulsion system (10, 10a) according to one of the claims 1 to 10, further comprising an revolutions per minute detecting means (36) for detecting the engine speed; and a second determination means for determining in the second propeller driving mode whether the engine (14) should be connected to the propeller (12) or not based on comparison between the result from the detection by the revolution per minute detecting means (36) and a first prescribed value.

12. Hybrid-type watercraft propulsion system (10, 10a) according to one of the claims 1 to 11, further comprising a third determination means for determining in the second propeller driving mode if the propeller (12) should be driven by utilizing the accelerating electric motor (16) as well, or, alternatively, the propeller (12) should be driven without running the electric motor (16), based on comparison between the result from the detection by the revolution per minute detecting means (36) and a second prescribed value.

13. Hybrid-type watercraft propulsion system (10, 10a) according to one of the claims 1 to 12, wherein the engine (14) is operated at idle when the electric motor (16) is driven by the electric power from the battery (52) in the first propeller driving mode.

14. Hybrid-type watercraft propulsion system (10, 10a) according to one of the claims 8 to 13, comprising the battery (52) for accumulating the electric power to be supplied to the electric motor (16); and the charge level detecting means (54) for detecting the amount of electricity remaining in the battery (52), wherein the setting means (42) sets the propeller driving mode to the first propeller driving mode or to the second propeller driving mode, additionally taking account of comparison between the result from the detection by the charge level detecting means (54) and a first threshold.

15. Hybrid-type watercraft propulsion system (10, 10a) according to claim 14, comprising the first determination means for determining in the first propeller driving mode whether the electric power should be charged to the battery (52) by means of the engine generation based on comparison between the result from the detection by the charge level detecting means (54) and a second threshold.

16. Hybrid-type watercraft propulsion system (10, 10a) according to one of the claims 1 to 15, further comprising a switching means (56) for alternatively selecting to use or not to use the electric motor (16) for driving the propeller (12), wherein the setting means (42) sets the propeller driving mode to the first propeller driving mode or to the second propeller driving mode, additionally taking account of the setting selected by the switching means (56).

17. Hybrid-type watercraft propulsion system (10, 10a) according to one of the claims 1 to 16, comprising the battery (52) for accumulating electric power to be supplied to the electric motor (16); the charge level detecting means (54) for detecting the amount of electricity remaining in the battery (52), and a fourth determination means for determining in the first propeller driving mode whether the electric motor (16) should be driven by the electric power from the battery (52) without restricting the output power of the electric motor (16), or the electric motor (16) should be driven by the electric power from the battery (52) restricting the output power of the electric motor (16) based on the result from the detection by the charge level detecting means (54).

18. A method for operating the hybrid-type watercraft propulsion system (10, 10a) according to one of claims 1-17, having an engine (14) and an electric motor (16) as a source of driving force for a propeller (12), **characterized by** a first operating step, in which instructions are received regarding the types of operating mode as well as regarding the amount of output power from the source of driving force; and by a second operating step, in which a setting is made for the propeller driving mode according to the instruction received in the first step; wherein in the second operating step, the propeller driving mode is set to the first propeller driving mode, in which the propeller (12) is driven by the electric motor (16), when the trolling mode is instructed in the first step; and the amount of output power from the electric motor (16) is adjusted according to the instruction received in the first operating step.

19. A method for operating the hybrid-type watercraft propulsion system (10, 10a) according to claim 18, wherein the propeller driving mode is set to the second propeller driving mode, in which the propeller (12) is driven by the engine (14), when the regular cruising mode is instructed in the first operating step, and the amount of output power from the engine (14) is adjusted according to the instruction received in the first operating step.

## Patentansprüche

1. Hybrid-Typ-Wasserfahrzeug-Antriebssystem (10, 10a), das ein Triebwerk (14) und einen Elektromotor (16) als eine Quelle für eine Antriebskraft für einen Propeller (12) hat und eine Festlegungs-Einrichtung (42) umfasst, die konfiguriert ist, um einen Propeller-Antriebs-Modus gemäß Instruktionen, eingegeben über eine einzige Instruktions-Einrichtung (46), zu setzen, diese einzige Instruktions-Einrichtung (46) ist zur wechselseitigen Eingabe von Instruktionen entsprechend dem Betriebs-Modus des Systems sowie einem Betrag der Ausgabeleistung der Antriebsquelle angepasst, **dadurch gekennzeichnet, dass** die Instruktions-Einrichtung (46) einen drehbaren Steuerhebel (46) beinhaltet, der konfiguriert ist, um Instruktionen entsprechend den Typen des Betriebs-Modus, sowie den Betrag der Abgabeleistung von der Quelle der Antriebskraft durch die Hebelposition, zu empfangen.

2. Ein Hybrid-Typ-Wasserfahrzeug-Antriebssystem gemäß Anspruch 1, wobei die Festlegungs-Einrichtung (42) konfiguriert ist, um einen ersten Propeller-Antriebs-Modus zu setzen, in dem der Propeller (12) durch den Elektromotor (16) angetrieben ist, wenn ein Trolling-Modus über die Instruktions-Einrichtung (46) instruiert ist, und ist konfiguriert, um den Betrag der Abgabeleistung des Elektromotors (16) gemäß diesen Instruktionen über die Instruktions-Einrichtung (46) anzupassen.

3. Hybrid-Typ-Wasserfahrzeug-Antriebssystem (10, 10a) gemäß Anspruch 2, wobei die Festlegungs-Einrichtung (42) konfiguriert ist, um einen zweiten Propeller-Antriebs-Modus zu setzen, indem der Propeller (12) durch das Triebwerk (14) angetrieben ist, wenn ein regulärer Cruising-Modus instruiert ist, und ist konfiguriert, um den Betrag der Abgabeleistung des Triebwerks (14) gemäß zu diesen Instruktionen über die Instruktions-Einrichtung (46) anzupassen.

4. Hybrid-Typ-Wasserfahrzeug-Antriebssystem (10, 10a) gemäß Anspruch 2 oder 3, wobei in dem ersten Propeller-Antriebs-Modus die einzige Antriebsquelle zum Antreiben des Propellers der Elektromotor (16) ist.

5. Hybrid-Typ-Wasserfahrzeug-Antriebssystem (10, 10a) gemäß Anspruch 1, wobei ein vorbeschriebener Bereich, der sich in Vorwärts- und Rückwärts-Richtungen um eine Neutral-Position des Steuerhebels (46) erstreckt, ein Stopp-Modus ist, ein vorbeschriebener Bereich in der Vorder-Seite des Stopp-Modus-Bereichs ein Trolling-Modus ist, und ein Bereich weiter in der Vorder-Seite des Trolling-Modus-Bereichs ein regulärer Cruising-Modus ist, und ein Bereich in einem rückwärtigen Abschnitt des Stopp-Modus-Bereichs ein Umkehr-Modus ist.

6. Hybrid-Typ-Wasserfahrzeug-Antriebssystem (10, 10a) gemäß Anspruch 1 oder 5, wobei eine Variation der Elektromotor-Abgabeleistung, relativ zu der Verlagerung des Steuerhebels (46), in dem Trolling-Modus kleiner gesetzt ist als eine Variation der Triebwerks-Abgabeleistung, relativ zu der Verlagerung des Steuerhebels (46), in dem regulären Cruising-Modus.

7. Hybrid-Typ-Wasserfahrzeug-Antriebssystem (10, 10a) gemäß einem der Ansprüche 1 bis 6, wobei eine Hysterese vorgesehen ist, durch welche die Modus-Schaltposition des Steuerhebels (46) unterschiedlich in dem Öffnungsbetrieb ist, der den Steuerhebel (46) weiter von der Neutral-Position bewegt, im Vergleich mit so einer Position in dem Schließbetrieb, um den Steuerhebel (46) näher zu der Neutral-Position zu bewegen.

8. Hybrid-Typ-Wasserfahrzeug-Antriebssystem (10, 10a) gemäß einem der Ansprüche 1 bis 7, das weiterhin umfasst eine Kupplung (22), vorgesehen zwischen dem Triebwerk (14) und dem Elektromotor (16), wobei der Elektromotor (16) zwischen dem Triebwerk (14) und dem Propeller (12) positioniert ist.

9. Hybrid-Typ-Wasserfahrzeug-Antriebssystem gemäß einem der Ansprüche 1 bis 8, das weiterhin umfasst, eine Batterie, zur Aufnahme elektrischer Leistung, die zu dem Elektromotor zuzuführen ist; und einer Lade-Pegel-Erfassungseinrichtung, zum Erfassen des Betrags von Elektrizität, die in der Batterie verblieben ist; und eine ersten Bestimmungseinrichtung, zum Bestimmen in dem ersten Propeller-Antriebs-Modus, ob die elektrische Leistung in die Batterie, durch Verwendung der Triebwerks-Erzeugung, zu laden ist oder nicht, auf Grundlage des Ergebnis der Erfassung durch die Lade-Pegel-Erfassungseinrichtung.

10. Hybrid-Typ-Wasserfahrzeug-Antriebssystem (10, 10a), gemäß Anspruch 9, wobei Verbindung zwischen dem Triebwerk (14) und dem Propeller (12) in dem ersten Propeller-Antriebs-Modus gelöst ist.

11. Hybrid-Typ-Wasserfahrzeug-Antriebssystem (10, 10a) gemäß einem der Ansprüche 1 bis 10, das weiterhin umfasst, eine Umdrehungen-pro-Minute-Erfassungseinrichtung (36) zur Erfassung der Triebwerks-Geschwindigkeit; und eine zweite Erfassungseinrichtung zum Bestimmen in dem zweiten Propeller-Antriebs-Modus, ob das Triebwerk (14) mit dem Propeller (12) verbunden werden soll oder nicht, auf Grundlage eines Vergleichs zwischen dem Ergebnis von der Erfassung durch die Umdrehungen-pro-Minute-Erfassungseinrichtung (36) und einem ersten vorbeschriebenen Wert.

12. Hybrid-Typ-Wasserfahrzeug-Antriebssystem (10, 10a) gemäß einem der Ansprüche 1 bis 11, das weiterhin umfasst eine dritte Bestimmungseinrichtung, zum Bestimmen in dem zweiten Propeller-Antriebs-Modus, ob der Propeller (12) ebenso durch Verwendung des Beschleunigungs-Elektromotors (16) angetrieben werden sollte, oder, alternativ, der Propeller angetrieben werden sollte, ohne Laufen des Elektromotors (16), auf Grundlage eines Vergleichs zwischen dem Ergebnis von der Erfassung durch die Umdrehungen-pro-Minute-Erfassungseinrichtung (36) und einem zweiten vorbeschriebenen Wert.

13. Hybrid-Typ-Wasserfahrzeug-Antriebssystem (10, 10a) gemäß einem der Ansprüche 1 bis 12, wobei das Triebwerk (14) im Leerlauf betrieben ist, wenn der Elektromotor (16) durch die elektrische Leistung von der Batterie (52) in dem ersten Propeller-Antriebs-Modus angetrieben ist.

14. Hybrid-Typ-Wasserfahrzeug-Antriebssystem (10, 10a) gemäß einem der Ansprüche 8 bis 13, das umfasst die Batterie (52), zum Aufnehmen der elektrischen Leistung, die zu dem Elektromotor (16) zuzuführen ist; und die Lade-Pegel-Erfassungseinrichtung (54) zum Erfassen des Betrags der Elektrizität, die in der Batterie (52) verblieben ist, wobei die Festlegungs-Einrichtung (42) den Propeller-Antriebs-Modus auf den ersten Propeller-Antriebs-odus oder den zweiten Propeller-Antriebs-Modus setzt, zusätzlich in Betracht ziehen des Vergleichs zwischen dem Ergebnis der Erfassung durch die Lade-Pegel-Erfassungseinrichtung (54) und einem ersten Grenzwert.

15. Hybrid-Typ-Wasserfahrzeug-Antriebssystem (10, 10a) gemäß Anspruch 14, das die erste Bestimmungseinrichtung, zum Bestimmung, in dem ersten Propeller-Antriebs-Modus, ob die elektrische Leistung in die Batterie (52) durch die Triebwerks-Erzeugung geladen werden sollte, auf Grundlage eines Vergleichs zwischen dem Ergebnis der Erfassung durch die Lade-Pegel-Erfassungseinrichtung (54) und einen zweiten Grenzwert, umfasst.

16. Hybrid-Typ-Wasserfahrzeug-Antriebssystem (10, 10a) gemäß einem der Ansprüche 1 bis 15, das weiterhin eine Schalteinrichtung (56) zur alternativen Auswahl, zum Verwenden oder Nicht-Verwenden des Elektromotors (16) zum Antrieb des Propellers (12), umfasst, wobei die Festlegungs-Einrichtung (42) den Propeller-Antriebs-Modus auf den ersten Propeller-Antriebs-Modus oder den zweiten Propeller-Antriebs-Modus setzt, zusätzlich in Betracht ziehen des Setzens ausgewählt durch die Schalteinrichtung (56).

17. Hybrid-Typ-Wasserfahrzeug-Antriebssystem (10, 10a) gemäß einem der Ansprüche 1 bis 16, das die Batterie (52), zum Aufnehmen elektrischer Leistung, die zu dem Elektromotor (16) zuzuführen ist; die Lade-Pegel-Erfassungseinrichtung (54), zum Erfassen eines Betrags von Elektrizität verblieben in der Batterie (52) und einer vierten Bestimmungseinrichtung zum Bestimmen in dem ersten Propeller-Antriebs-Modus ob der Elektromotor (16) durch die elektrische Leistung von der Batterie (52) ohne Beschränkung der Abgabeleistung des Elektromotors (16) angetrieben werden sollte, oder ob der Elektromotor (16) durch die elektrische Leistung von der Batterie (52) mit Beschränkung der Abgabeleistung des Elektromotors (16) betrieben werden sollte auf Grundlage des Ergebnis von der Erfassung durch die Lade-Pegel-Erfassungseinrichtung (54), umfasst.

18. Ein Verfahren zum Betrieb des Hybrid-Typ-Wasserfahrzeug-Antriebssystems (10, 10a) gemäß einem der Ansprüche 1 bis 17, das ein Triebwerk (14) und einen Elektromotor (16) als eine Quelle der Antriebskraft für einen Propeller (12) hat, **gekennzeichnet durch** einen ersten Betriebs-Schritt, in dem Instruktionen entsprechend den Typen von Betriebs-Modus sowie dem Betrag der Abgabeleistung von der Quelle der Antriebskraft empfangen werden; und **durch** einen zweiten Betriebs-Schritt indem ein Festlegen für den Propeller-Antriebs-Modus gemäß zu den Instruktionen, empfangen in dem ersten Schritt, durchgeführt wird; wobei in dem zweiten Betriebs-Schritt der Propeller-Antriebs-Modus auf den ersten Propeller-Antriebs-Modus gesetzt ist, indem der Propeller (12) **durch** den Elektromotor (16) angetrieben ist, wenn der Trolling-Modus in dem ersten Schritt instruiert ist; und der Betrag der Abgabeleistung von dem Elektromotor (16) ist gemäß der Instruktionen, empfangen in dem ersten Betriebs-Schritt, eingestellt.

19. Ein Verfahren zum Betrieb des Hybrid-Typ-Wasserfahrzeug-Antriebssystems (10, 10a) gemäß Anspruch 18, wobei der Propeller-Antriebs-Modus auf den zweiten Propeller-Antriebs-Modus gesetzt ist, indem der Propeller (12) durch das Triebwerk (14) angetrieben ist, wenn der reguläre Cruising-Modus in dem ersten Betriebs-Schritt instruiert ist, und der Betrag der Abgabeleistung von dem Triebwerk (14) ist gemäß der Instruktionen, empfangen in dem ersten Betriebs-Schritt, eingestellt.

## Revendications

1. Système de propulsion de bateaux de type hybride (10, 10a) comportant un moteur à combustion interne (14) et un moteur électrique (16) servant de source de force propulsive pour une hélice (12) et comprenant un moyen de réglage (42) conçu pour régler un mode d'entraînement de l'hélice en fonction de l'entrée d'instructions via un moyen d'instruction unique (46), ledit moyen d'instruction unique (46) étant adapté pour l'entrée mutuelle d'instructions concernant le mode de fonctionnement du système ainsi qu'une quantité de puissance de sortie de la source de propulsion, **caractérisé en ce que** le moyen d'instruction (46) inclut un levier de commande rotatif (46) conçu pour recevoir des instructions concernant les types de mode de fonctionnement, ainsi que la quantité de puissance de sortie en provenance de la source de force propulsive, au moyen de la position du levier.

2. Système de propulsion de bateaux de type hybride selon la revendication 1, où le moyen de réglage (42) est conçu pour établir un premier mode d'entraînement de l'hélice, dans lequel l'hélice (12) est entraînée par le moteur électrique (16), lorsqu'un mode de traîne est ordonné via le moyen d'instruction (46), et est conçu pour ajuster la quantité de puissance de sortie du moteur électrique (16) en fonction de ces instructions via le moyen d'instruction (46).

3. Système de propulsion de bateaux de type hybride (10, 10a) selon la revendication 2, où le moyen de réglage (42) est conçu pour établir un second mode d'entraînement de l'hélice, dans lequel l'hélice (12) est entraînée par le moteur à combustion interne (14), lorsqu'un mode de croisière normal est ordonné, et est conçu pour ajuster la quantité de puissance de sortie du moteur à combustion interne (14) en fonction de ces instructions via le moyen d'instruction (46).

4. Système de propulsion de bateaux de type hybride (10, 10a) selon la revendication 2 ou 3, où dans le premier mode d'entraînement de l'hélice, la seule source de propulsion pour l'hélice est le moteur électrique (16).

5. Système de propulsion de bateaux de type hybride (10, 10a) selon la revendication 1, où une plage prescrite s'étendant dans les directions avant et arrière autour de la position neutre du levier de commande (46) est un mode arrêt, une plage prescrite du côté avant du mode arrêt est un mode de traîne, et une plage plus éloignée vers le côté avant du mode de traîne est un mode de croisière normal, et une plage dans la section arrière du mode arrêt est un mode marche arrière.

6. Système de propulsion de bateaux de type hybride (10, 10a) selon la revendication 1 ou 5, où une variation de la puissance de sortie du moteur électrique par rapport au déplacement du levier de commande (46) dans le mode de traîne est réglée de manière à être plus petite qu'une variation de la puissance de sortie du moteur par rapport au déplacement du levier de commande (46) dans le mode de croisière normal.

7. Système de propulsion de bateaux de type hybride (10, 10a) selon l'une des revendications 1 à 6, où une hystérésis est prévue, par laquelle la position de changement de mode du levier de commande (46) est différente lors de l'opération d'ouverture, lors de laquelle le levier de commande (46) est éloigné de la position neutre, en comparaison avec la même position lors de l'opération de fermeture, lors de laquelle le levier de commande (46) est rapproché de la position neutre.

8. Système de propulsion de bateaux de type hybride (10, 10a) selon l'une des revendications 1 à 7, comprenant en outre un embrayage (22) disposé entre le moteur à combustion interne (14) et le moteur électrique (16), où le moteur électrique (16) est disposé entre le moteur à combustion interne (14) et l'hélice (12).

9. Système de propulsion de bateaux de type hybride selon l'une des revendications 1 à 8, comprenant en outre une batterie pour accumuler de l'énergie électrique à fournir au moteur électrique ; et un moyen de détection du niveau de charge pour détecter la quantité d'électricité restante dans la batterie ; et un premier moyen de détermination pour déterminer, dans le premier mode d'entraînement de l'hélice, si la puissance électrique doit être chargée dans la batterie en utilisant la génération par le moteur ou non, sur la base du résultat de la détection par le moyen de détection du niveau de charge.

10. Système de propulsion de bateaux de type hybride (10, 10a) selon la revendication 9, où la connexion entre le moteur à combustion interne (14) et l'hélice (12) est désengagée dans le premier mode d'entraînement de l'hélice.

11. Système de propulsion de bateaux de type hybride (10, 10a) selon l'une des revendications 1 à 10, comprenant en outre un moyen de détection du nombre de tours par minute (36) pour détecter la vitesse du moteur ; et un second moyen de détermination pour déterminer, dans le second mode d'entraînement de l'hélice, si le moteur à combustion interne (14) doit être connecté à l'hélice (12) ou non sur la base de la comparaison entre le résultat de la détection par le moyen de détection du nombre de tours par minute (36) et une première valeur orescrite.

12. Système de propulsion de bateaux de type hybride (10, 10a) selon l'une des revendications 1 à 11, comprenant en outre un troisième moyen de détermination pour déterminer, dans le second mode d'entraînement de l'hélice, si l'hélice (12) doit être entraînée en utilisant également le moteur électrique accélérant (16), ou, alternativement, si l'hélice (12) doit être entraînée sans faire tourner le moteur électrique (16), sur la base de la comparaison entre le résultat de la détection par le moyen de détection du nombre de tours par minute (36) et une seconde valeur prescrite.

13. Système de propulsion de bateaux de type hybride (10, 10a) selon l'une des revendications 1 à 12, où le moteur à combustion interne (14) tourne au ralenti lorsque le moteur électrique (16) est entraîné par la puissance électrique provenant de la batterie (52) dans le premier mode d'entraînement de l'hélice.

14. Système de propulsion de bateaux de type hybride (10, 10a) selon l'une des revendications 8 à 13, comprenant la batterie (52) pour accumuler la puissance électrique à fournir au moteur électrique (16) ; et le moyen de détection du niveau de charge (54) pour détecter la quantité d'électricité restante dans la batterie (52), où le moyen de réglage (42) règle le mode d'entraînement de l'hélice sur le premier mode d'entraînement à l'hélice ou sur le second mode d'entraînement à l'hélice, en prenant également en compte la comparaison entre le résultat de la détection par le moyen de détection du niveau de charge (54) et un premier seuil.

15. Système de propulsion de bateaux de type hybride (10, 10a) selon la revendication 14, comprenant le premier moyen de détermination pour déterminer, dans le premier mode d'entraînement de l'hélice, si la puissance électrique doit être chargée dans la batterie (52) au moyen de la génération par le moteur, sur la base de la comparaison entre le résultat de la détection par le moyen de détection du niveau de charge (54) et un second seuil.

16. Système de propulsion de bateaux de type hybride (10, 10a) selon l'une des revendications 1 à 15, comprenant en outre un moyen de commutation (56) pour sélectionner alternativement l'utilisation ou non du moteur électrique (16) pour entraîner l'hélice (12), où le moyen de réglage (42) règle le mode d'entraînement de l'hélice sur le premier mode d'entraînement de l'hélice ou sur le second mode d'entraînement de l'hélice, en prenant également en compte le réglage sélectionné par le moyen de commutation (56).

17. Système de propulsion de bateaux de type hybride (10, 10a) selon l'une des revendications 1 à 16, comprenant la batterie (52) pour accumuler la puissance électrique à fournir au moteur électrique (16) ; le moyen de détection du niveau de charge (54) pour détecter la quantité d'électricité restante dans la batterie (52), et un quatrième moyen de détermination pour déterminer, dans le premier mode d'entraînement de l'hélice, si le moteur électrique (16) doit être entraîné par la puissance électrique de la batterie (52) sans restreindre la puissance de sortie du moteur électrique (16), ou si le moteur électrique (16) doit être entraîné par la puissance électrique de la batterie (52) en restreignant la puissance de sortie du moteur électrique (16), sur la base du résultat de la détection par le moyen de détection du niveau de charge (54).

18. Procédé de fonctionnement d'un système de propulsion de bateaux de type hybride (10, 10a) selon l'une des revendications 1-17, comportant un moteur à combustion interne (14) et un moteur électrique (16) servant de source de force propulsive pour une hélice (12), **caractérisé par** une première étape de fonctionnement, dans laquelle des instructions sont reçues concernant les types de mode de fonctionnement ainsi que concernant la quantité de puissance de sortie de la source de force propulsive ; et par une seconde étape de fonctionnement, dans laquelle un réglage est réalisé concernant le mode d'entraînement de l'hélice, en fonction de l'instruction reçue lors de la première étape, où lors de la seconde étape de fonctionnement, lorsque le mode de traîne est ordonné lors de la première étape, le mode d'entraînement de l'hélice est réglé sur le premier mode d'entraînement à l'hélice, dans lequel l'hélice (12) est entraînée par le moteur électrique (16) ; et la quantité de puissance de sortie du moteur électrique (16) est ajustée en fonction de l'instruction reçue lors de la première étape de fonctionnement.

19. Procédé de fonctionnement d'un système de propulsion de bateaux de type hybride (10, 10a) selon la revendication 18, où lorsque le mode de croisière normal est ordonné lors de la première étape de fonctionnement, le mode d'entraînement de l'hélice est réglé sur le second mode d'entraînement de l'hélice, dans lequel l'hélice (12) est entraînée par le moteur à combustion interne (14, et la quantité de puissance de sortie du moteur à combustion interne (14) est ajustée en fonction de l'instruction reçue lors de la première étape de fonctionnement.
